# EUROPEAN PATENT APPLICATION

(11) **EP 3 247 125 A1**
(43) Date of publication of application: **22.11.2017**
(21) Application number: 16737077.4
(22) Date of filing: 13.01.2016
(51) Int. Cl.: H04N 21/462, G11B 27/10

(54) **SHUFFLE PLAY METHOD AND DEVICE**

(30) Priority: 14.01.2015 CN 201510019186; 15.01.2015 CN 201510020622; 29.01.2015 CN 201510046532
(71) Applicant: Guangzhou Kugou Computer Technology Co., Ltd., Tianhe District Guangzhou, Guangdong 510665 (CN)
(72) Inventor: ZHAO, Weifeng, Shenzhen Guangdong 518000 (CN)
(74) Representative: Detken, Andreas
(86) International application number: PCT/CN2016/070798
(87) International publication number: WO 2016/112852

(57) **Abstract**

A shuffle play method and device. The method comprises: acquiring multimedia files to be played; and grouping the multimedia files and determining, according to a group, a play order of the multimedia files to be played, to form a shuffle play list; and performing play according to the obtained shuffle play list.

## Description

The present application claims priority to Chinese Patent Application No. 201510019186.X, titled "SHUFFLE PLAY METHOD AND DEVICE", filed on January 14, 2015, Chinese Patent Application No. 201510020622.5, titled "SHUFFLE PLAY METHOD AND DEVICE", filed on January 15, 2015 and Chinese Patent Application No. 201510046532.3, titled "MUSIC SHUFFLE PLAY METHOD AND DEVICE", filed on January 29, 2015 with the State Intellectual Property Office of the People's Republic of China, which are incorporated herein by reference in their entireties.

### TECHNICAL FIELD

The present disclosure relates to the technical field of multimedia playing, and in particular to a random play method and a random play device.

### BACKGROUND

For multimedia play devices or systems involved in multimedia playing, such as personal computers, mobile phones, portable multimedia play devices, and networks on demand, a commonly used function is to randomly play a certain number of multimedia files. Taking a case of playing songs as an example. Once a user selects a random play function, the multimedia play device or system will play a randomly extracted song after the one which has been played.

However, in the practical random extraction, there often arises the case where the multimedia file which has been played is randomly extracted again in a short time and is played repeatedly, and some multimedia files are played for more times and other multimedia files which have not been played have no chance to be randomly extracted for play, thereby worsening the user experience.

### SUMMARY

In view of the above, a method and a device are provided in the disclosure to address the issue that some multimedia files are played repeatedly and some multimedia files are never played during the random play in the conventional art.

A random play method is provided according to the embodiment of the disclosure. The method includes:
obtaining to-be-played multimedia files; and
dividing the multimedia files into one or more groups, determining a play order for the to-be-played multimedia files based on the groups to form a random playlist, and playing the to-be-played multimedia files based on the random playlist.

Optionally, the dividing the multimedia files into one or more groups, determining the play order for the to-be-played multimedia files based on the groups to form the random playlist, and playing the to-be-played multimedia files based on the random playlist includes:
dividing the to-be-played multimedia files into at least one group, and generating one multimedia file ring structure for each group;
for each multimedia file ring structure, extracting the multimedia files according to a pre-set extraction rule, and sorting the multimedia files based on an extraction order to obtain the random playlist corresponding to the multimedia file ring structure; and
playing the multimedia files based on the obtained random playlist.

Optionally, the dividing the multimedia files into one or more groups, determining the play order for the to-be-played multimedia files based on the groups to form the random playlist, and playing the to-be-played multimedia files based on the random playlist includes:
dividing the to-be-played multimedia files into one or more groups;
generating randomly a numerical sequence for each of the groups, where a length of the numerical sequence equals to the number of the to-be-played multimedia files in the group, and each element in the numerical sequence is uniquely corresponding to one to-be-played multimedia file in the group;
extracting sequentially the to-be-played multimedia files in the group respectively corresponding to elements in the numerical sequence based on an order of values of the elements in the numerical sequence to obtain a group list;
gathering group lists of the groups to obtain the random playlist; and
playing the multimedia files based on the obtained random playlist.

Optionally, the dividing the multimedia files into one or more groups, determining the play order for the to-be-played multimedia files based on the groups to form the random playlist, and playing the to-be-played multimedia files based on the random playlist includes:
sorting the to-be-played multimedia files and marking the to-be-played multimedia files with serial numbers;
dividing the serial numbers of the sorted multimedia files into multiple groups;
determining an interval value based on the number of the multimedia files in each of the groups, where a cross interval combining is performed among the serial numbers of the multimedia files in the groups at an interval of the interval value;
performing the cross interval combining among the serial numbers of the multimedia files in the groups at an interval of the interval value, to generate the random playlist; and
playing the multimedia files corresponding to the serial numbers in the random playlist based on the serial numbers in the random playlist.

A random play device is provided according to the embodiment of the disclosure. The device includes:
an obtaining unit, configured to obtain to-be-played multimedia files; and
a playing unit, configured to divide the multimedia files into one or more groups, determine a play order for the to-be-played multimedia files based on the groups to form a random playlist, and play the to-be-played multimedia files based on the random playlist.

Optionally, the playing unit includes:
a dividing and generating module, configured to divide the to-be-played multimedia files into at least one group, and generate one multimedia file ring structure for each group;
an extracting module, configured to, after the dividing and generating module generates the multimedia file ring structure, for each multimedia file ring structure, extract the multimedia files according to a pre-set extraction rule, and sort the multimedia files based on an extraction order to obtain the random playlist corresponding to the multimedia file ring structure; and
a playing module, configured to, after the extracting module obtains the random playlist, play the multimedia files based on the obtained random playlist.

Optionally, the playing unit includes:
a grouping module, configured to divide the to-be-played multimedia files into one or more groups;
a generating module, configured to generate randomly a numerical sequence for each of the groups, where a length of the numerical sequence equals to the number of the to-be-played multimedia files in the group, and each element in the numerical sequence is uniquely corresponding to one to-be-played multimedia file in the group;
an extracting module, configured to extract sequentially the to-be-played multimedia files in the group respectively corresponding to elements in the numerical sequence based on an order of values of the elements in the numerical sequence to obtain a group list; and
a gathering module, configured to gather group lists of the groups to obtain the random playlist, and play the multimedia files based on the random playlist.

Optionally, the playing unit includes:
a sorting module, configured to sort the to-be-played multimedia files;
a marking module, configured to mark the multimedia files with serial numbers after the sorting module sorts the multimedia files;
a grouping module, configured to divide the serial numbers of the sorted multimedia files marked by the marking module into multiple groups;
a determining module, configured to determine an interval value based on the number of the multimedia files in each of the groups divided by the grouping module, where a cross interval combining is performed among the serial numbers of the multimedia files in the groups at an interval of the interval value;
a combining module, configured to perform the cross interval combining among the serial numbers of the multimedia files in the groups at an interval of the interval value determined by the determining module, to generate the random playlist; and
a playing module, configured to play the multimedia files corresponding to the serial numbers in the random playlist generated by the combining module based on the serial numbers in the random playlist.

It can be known from the technical solution described above, the embodiments of the disclosure at least have the following advantages.

The random play device divides all the to-be-played multimedia files in a playlist into at least one group, and generates one multimedia file ring structure for each group; for each multimedia file ring structure, extracts the multimedia files according to a pre-set extraction rule, and sorts the multimedia files based on an extraction order to obtain the random playlist corresponding to the multimedia file ring structure; and plays the multimedia files based on the obtained multiple random playlists. By generating multimedia file ring structures, extracting multimedia files according to the pre-set extraction rules to generate random playlists, the multimedia files are randomly played with the same probability, and the case that some multimedia files are played repeatedly and other multimedia files are never played is avoided during the random play, thereby improving the user experience effectively.

In the technical solution according to the embodiments of the disclosure, the to-be-played multimedia files are divided into groups to obtain multiple groups, a numerical sequence is generated randomly for each of the groups, where a length of the numerical sequence equals to the number of the to-be-played multimedia files in the group such that each element in the numerical sequence is uniquely corresponding to one to-be-played multimedia file in the group, the to-be-played multimedia files in the group respectively corresponding to elements in the numerical sequence are extracted sequentially based on an order of values of the elements in the numerical sequence to obtain a group list, and group lists of the groups are gathered to obtain the random playlist. According to the embodiment of the present disclosure, each element in the numerical sequence is uniquely corresponding to one to-be-played multimedia file in the group, and the values of the elements in the numerical sequence are sorted to determine the order of the to-be-played multimedia files in the group successively. The generated group list include the to-be-played multimedia files in the group, and each of the to-be-played multimedia files only appears once. Since the numerical sequences are generated randomly, the obtained group lists are different from each other. Thus, compared with the conventional art, the random strategy according to the embodiments of the present disclosure avoids the case where the to-be-played multimedia files that have been played are randomly extracted again in a short time and are played repeatedly, but some to-be-played multimedia files have never been played, such that each of the to-be-played multimedia files only appears once during one cycle. Meanwhile, the embodiments of the disclosure has a low computational complexity and can shorten the generation time for the random playlist.

With the random play method and device according to the embodiments of the present disclosure, the serial numbers of the multimedia files are divided into one or more groups, an interval value is determined based on the number of the multimedia files in each of the groups, the cross interval combining is performed among the serial numbers of the multimedia files in the groups at an interval of the interval value to generate the random playlist, and the multimedia files corresponding to the serial numbers in the random playlist are played based on the random playlist. In this way, the balance of probabilities that the multimedia files are played during random play is effectively improved.

In order to make the above-described and other objectives, features and merits apparent, preferred embodiments in conjunction with drawings are described in detail hereinafter.

### BRIEF DESCRIPTION OF THE DRAWINGS

Figure 1 is a schematic diagram of a structure of a terminal according to an embodiment of the present disclosure;
Figure 2 is a schematic flow chart of a random play method according to an embodiment of the present disclosure;
Figure 3 is a schematic flow chart of a step of a random play method according to an embodiment of the present disclosure;
Figure 4 is a schematic flow chart of a step of a random play method according to another embodiment of the present disclosure;
Figure 5 is a schematic diagram of a multimedia file ring structure according to an embodiment of the present disclosure;
Figure 6 is a schematic diagram of a structure of a random play device according to an embodiment of the present disclosure;
Figure 7 is a schematic diagram of a structure of a unit in a random play device according to an embodiment of the present disclosure;
Figure 8 is a schematic diagram of a structure of a unit in a random play device according to another embodiment of the present disclosure;
Figure 9 is a schematic diagram of a step of a random play method according to an embodiment of the present disclosure;
Figure 10 is a schematic diagram of a step of a random play method according to another embodiment of the present disclosure;
Figure 11 is a schematic diagram of a unit of a random play device according to an embodiment of the present disclosure;
Figure 12 is a schematic diagram of a unit of a random play device according to another embodiment of the present disclosure;
Figure 13 is a schematic diagram of a random play device according to another embodiment of the present disclosure;
Figure 14 is a schematic structure diagram of a terminal device;
Figure 15 is a flow chart of a step of a random play method according to an embodiment of the present disclosure;
Figure 16 is a flow chart of a step of a random play method according to an embodiment of the present disclosure;
Figure 17 is a flow chart of a step of a random play method according to an embodiment of the present disclosure;
Figure 18 is a schematic structure diagram of a unit of a random play device according to an embodiment of the present disclosure; and
Figure 19 is a schematic structure diagram of a unit of a random play device according to an embodiment of the present disclosure.

### DETAILED DESCRIPTION OF THE EMBODIMENTS

In order to further illustrate the technical means adopted to achieve the purpose of the disclosure and illustrate the effect of the disclosure, the specific embodiments, structures, features and effects of the present disclosure are described in detail in conjunction with drawings and preferred embodiments.

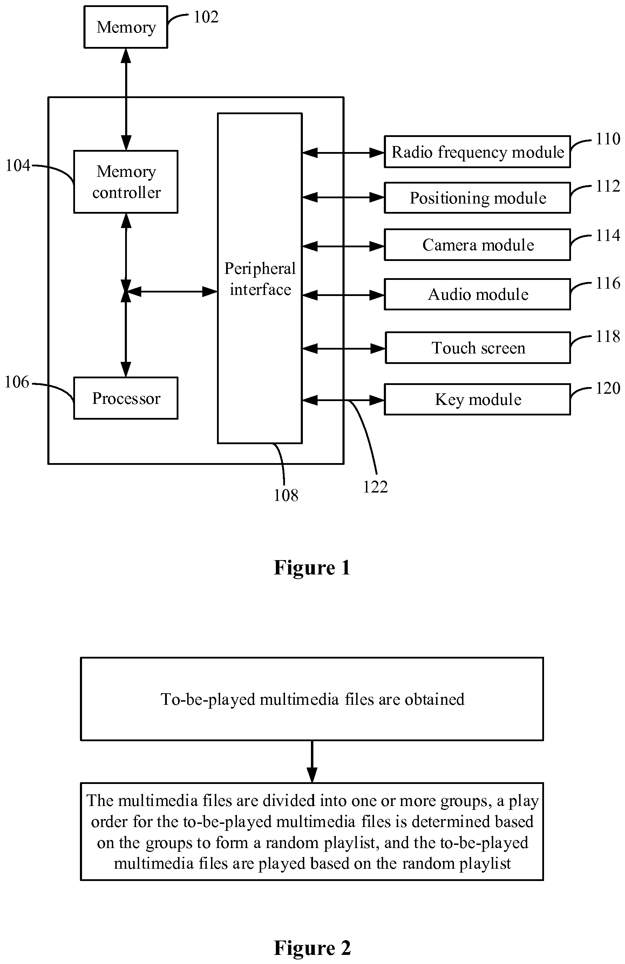

According to an embodiment of the present disclosure, the random play device may be a terminal or a part of a terminal. Referring to Figure 1, a schematic diagram of a structure of a terminal according to an embodiment of the present disclosure is shown. As shown in Figure 1, the terminal includes a memory 102, a memory controller 104, one or more (only one is shown in the drawing) processors 106, a peripheral interface 108, a radio frequency module 110, a positioning module 112, an camera module 114, an audio module 116, a touch screen 118, and a key module 120. These components communicate with each other through one or more communication buses/signal lines 122.

It should be understood that the structure shown in Figure 1 is only illustrative, and the terminal may also include more or less components than the components shown in Figure 1, or have a different configuration from that shown in Figure 1. The components shown in Figure 1 may be implemented by hardware, software, or a combination thereof.

The memory 102 may be configured to store software programs and modules, such as program instructions/modules corresponding to the character input method and device in the terminal according to the embodiment of the present disclosure. The memory 102 executes the software programs and modules stored in the memory 104, so as to perform various functional applications and data processing, thereby implementing the above-mentioned random play method.

The memory 102 may include a high speed random access memory, and may further include a nonvolatile memory, such as one or more magnetic storage devices, flash memory, or other nonvolatile solid state memory. In some embodiments, the memory 102 may further include a memory which is remotely arranged relative to the processor 106. These remote memories may be connected to the terminal via a network. Examples of such networks include, but are not limited to, the Internet, an intranet, a local area network, a mobile communication network, and combinations thereof. Access to the memory 102 by the processor 106 and other possible components may be performed under the control of the memory controller 104.

The peripheral interface 108 couples various inputs/input devices to the CPU and memory 102. The processor 106 runs various software and instructions in the memory 102, so as to perform various functions of the terminal and to perform data processing.

In some embodiments, the peripheral interface 108, the processor 106, and the memory controller 104 may be implemented in a single chip. In some other embodiments, the peripheral interface 108, the processor 106, and the memory controller 104 may be implemented by separate chips respectively.

The radio frequency module 110 is configured to receive and transmit electromagnetic waves, and realize the mutual conversion of the electromagnetic wave and the electric signal, thereby communicating with the communication network or other equipment. The radio frequency module 110 may include various existing circuit elements for performing these functions, such as antennas, radio frequency transceivers, digital signal processors, encryption/decryption chips, subscriber identity modules (SIM) cards, and memories. The radio frequency module 110 may communicate with various networks such as the Internet, an intranet, a wireless network, or communicate with other devices over a wireless network. The above-mentioned wireless network may include a cellular telephone network, a wireless local area network or a metropolitan area network. The above-mentioned wireless networks may use various communication standards, protocols and techniques including, but not limited to, Global System for Mobile Communication (Global System for Mobile Communication, GSM), Enhanced Data GSM Environment (Enhanced Data GSM Environment, EDGE), Wideband Code Division Multiple Access (Wideband Code Division Multiple Access, W-CDMA), Code Division Access (Code Division Access, CDMA), Time Division Multiple Access (Time Division Multiple Access, TDMA), Bluetooth, Wireless Fidelity (Wireless Fidelity, WiFi) (such as American Institute of Electrical and Electronics Engineers standards IEEE 802.11a, IEEE 802.11b, IEEE802.11g and/or IEEE 802.11n), Voice over Internet Protocal (Voice over Internet Protocal, VoIP), Worldwide Interoperability for Microwave Access (Worldwide Interoperability for Microwave Access, Wi-Max), other protocols for mail, instant messaging and short messaging, as well as any other suitable communication protocols, and even those that are not yet developed.

The positioning module 112 is configured to obtain the current location of the terminal. Examples of the positioning module 112 include, but are not limited to, Global Positioning System (GPS), a positioning techniques based on the wireless local area network or mobile communication networks.

The camera module 114 is configured to take a picture or video. The taken picture or video may be stored in the memory 102 and may be transmitted through the radio frequency module 110.

The audio module 116 provides an audio interface to the user. The audio module 116 may include one or more microphones, one or more loudspeakers, and an audio circuit. The audio circuit receives the sound data from the peripheral interface 108, converts the sound data into electrical information, and transmits the electrical information to the loudspeaker. The loudspeaker converts the electrical information into sound waves that the human ear can hear. The audio circuit further receives electrical signal from the microphone, converts the electrical signal into sound data, and transmits the sound data to the peripheral interface 108 for further processing. The audio data may be obtained from the memory 102 or through the radio frequency module 110. In addition, the audio data may be stored in the memory 102 or transmitted through the radio frequency module 110. In some embodiments, the audio module 116 may further include a earphone hole for providing an audio interface to the earphone or other device.

The touch screen 118 provides an output and input interface between the terminal and the user. Specifically, the touch screen 118 displays video output to the user, the contents of the video output may include text, graphics, video, and any combination thereof. Some of the output results correspond to some user interface objects. The touch screen 118 further receives a user input, such as a gesture operation including clicking and sliding, such that the user interface object responds to the user input. The techniques for detecting the user input may be resistive, capacitive, or any other possible touch detection techniques. A displaying module of the touch screen 118 includes, but is not limited to, a liquid crystal display or a light emitting polymer display.

The key module 120 also provides an input interface between the user and the terminal, and the user can press different keys to enable the terminal to perform different functions.

Referring to Figure 2, a random play method according to an embodiment of the present disclosure includes:
obtaining to-be-played multimedia files; and
dividing the multimedia files into one or more groups, determining a play order for the to-be-played multimedia files based on the groups to form a random playlist, and playing the to-be-played multimedia files based on the random playlist.

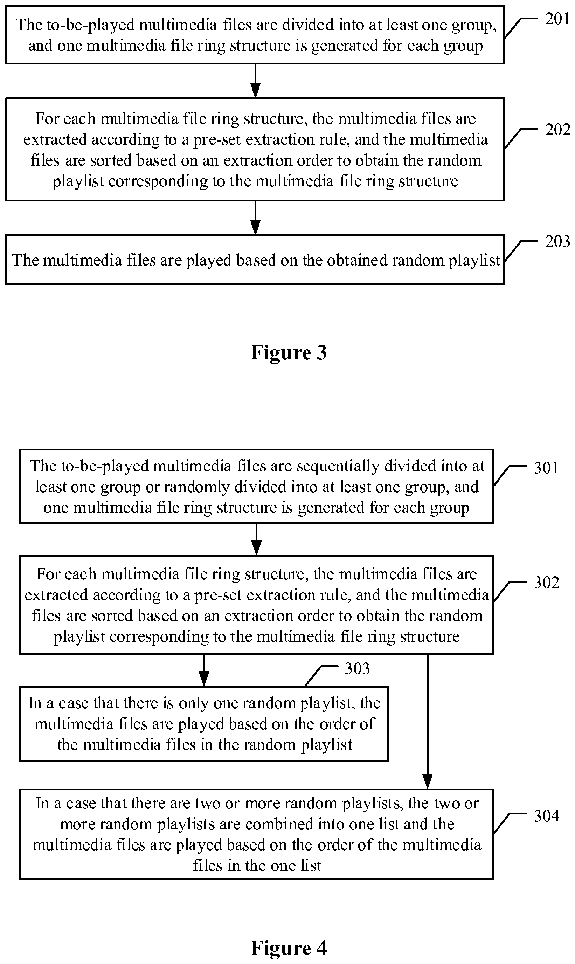

Referring to Figure 3, the dividing the multimedia files into one or more groups, determining the play order for the to-be-played multimedia files based on the groups to form the random playlist, and playing the to-be-played multimedia files based on the random playlist in the method shown in Figure 2 may include Step 201 to Step 203.

In Step 201, the to-be-played multimedia files are divided into at least one group, and one multimedia file ring structure is generated for each group.

According to the embodiment of the present disclosure, the multimedia play device or system includes a certain number of multimedia files, and when the user determines to play the certain number of multimedia files randomly, the random play device (hereinafter referred to as the device) divides the to-be-played multimedia files into at least one group, and generates one multimedia file ring structure for each group.

The multimedia file ring structure refers to nodes arranged in a ring which represent multimedia files belong to one group.

The device may be a smart phone, a personal computer, a PAD, a play system, or a portable multimedia play device, and the like.

In Step 202, for each multimedia file ring structure, the multimedia files are extracted according to a pre-set extraction rule, and the multimedia files are sorted based on an extraction order to obtain the random playlist corresponding to the multimedia file ring structure. According to the embodiment of the present disclosure, for each multimedia file ring structure, the device extracts the multimedia files according to the pre-set extraction rule, and sorts the multimedia files based on the extraction order to obtain the random playlist corresponding to the multimedia file ring structure. For example, if four multimedia ring structures are generated, one corresponding random playlist is generated for each multimedia ring structure according to the pre-set extraction rule, and finally four random playlists are obtained.

After one multimedia file is extracted from the multimedia file ring structure, the multimedia file is equivalent to being deleted from the multimedia file ring structure and is no longer included in the multimedia file ring structure.

In Step 203, the multimedia files are played based on the obtained random playlist.

According to the embodiment of the present disclosure, the multimedia files are played based on the obtained random playlist after the random playlist is obtained.

According to the embodiment of the present disclosure, the device divides the to-be-played multimedia files into at least one group, and generates one multimedia file ring structure for each group; for each multimedia file ring structure, extracts the multimedia files according to a pre-set extraction rule, and sorts the multimedia files based on an extraction order to obtain the random playlist corresponding to the multimedia file ring structure; and plays the multimedia files based on the obtained multiple random playlists. By generating multimedia file ring structures, extracting multimedia files according to the pre-set extraction rules to generate random playlists, the multimedia files are randomly played with the same probability, and the case that some multimedia files are played repeatedly and other multimedia files are never played is avoided during the random play, thereby improving the user experience effectively.

Referring to Figure 4, the dividing the multimedia files into one or more groups, determining the play order for the to-be-played multimedia files based on the groups to form the random playlist, and playing the to-be-played multimedia files based on the random playlist in the method shown in Figure 2 may include Step 301 to Step 304.

In Step 301, the to-be-played multimedia files are sequentially divided into at least one group or randomly divided into at least one group, and one multimedia file ring structure is generated for each group.

According to the embodiment of the present disclosure, after the user determines to randomly play the multimedia files, the device divides sequentially or randomly all the multimedia files in the playlist to be played into at least one group, and generates one multimedia file ring structure for each group. The numbers of multimedia files in the groups may be the same or may be different. For example, if there are 100 multimedia files, the 100 multimedia files may be divided into two groups, with 50 multimedia files for each of the two groups, or with 30 multimedia files for one group and 70 multimedia files for the other group.

In a case that all the multimedia files in the playlist to be played are randomly divided into at least one group, non-adjacent multimedia files randomly extracted from the playlist to be played may form one group.

In Step 302, for each multimedia file ring structure, the multimedia files are extracted according to a pre-set extraction rule, and the multimedia files are sorted based on an extraction order to obtain the random playlist corresponding to the multimedia file ring structure. Then Step 303 or Step 304 is performed.

According to the embodiment of the present disclosure, for each multimedia file ring structure, the device extracts the multimedia files according to the pre-set extraction rule, and sorts the multimedia files based on the extraction order to obtain the random playlist corresponding to the multimedia file ring structure.

Specifically, for each multimedia file ring structure, an initial value of i is 1, i is a positive integer, and a first multimedia file is any one of the multimedia files in the multimedia file ring structure, and the following step 1 and step 2 are performed.

In step 1, it is counted forward or backward from an i-th multimedia file by m multimedia files in the multimedia file ring structure, and the multimedia file forward or backward from the i-th multimedia file by m+1 multimedia files in the multimedia file ring structure is determined as an (i+1)-th multimedia file, where m is a positive integer.

In step 2, the i-th multimedia file is extracted as an i-th multimedia file in the random playlist, the value of i is increased by 1, and it is returned to the step 1 of counting forward or backward from the i-th multimedia file by m multimedia files.

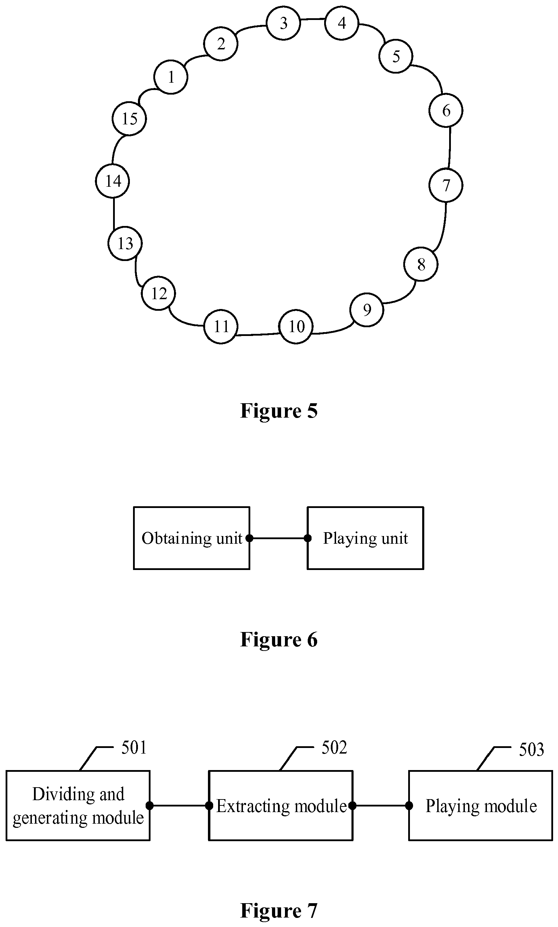

For a better understanding of the method for generating a random playlist, reference is made to Figure 5, which is a schematic diagram of a multimedia file ring structure. One node represents one multimedia file and the number in the node is an identity of the multimedia file.

In the case where the first multimedia file is the node 5, the multimedia file is extracted in the clockwise direction, and m is three, the second multimedia file is node 9 according to the above-described method for generating the random playlist. The first multimedia file, i.e., node 5, is extracted, three nodes are counted clockwise, the node 13 is determined as the third multimedia file, and the second multimedia file, i.e., the node 9, is extracted. By this analogy, the resulting paly order of the random playlist is node 5, node 9, node 13, node 2, node 7, node 12, node 3, node 10, node 1, node 11, node 6, node 4, node 8, node 15, node 14.

According to the embodiment of the present disclosure, for each multimedia file ring structure, the random playlist may be generated in the following manner.

Specifically, an initial value of i is 1, i is a positive integer, and a first multimedia file is any one of the multimedia files in the multimedia file ring structure, and the following step 1 and step 2 are performed.

In step 1, an i-th multimedia file in the multimedia file ring structure is extracted as an i-th multimedia file in the random playlist.

In step 2, it is counted forward or backward from the i-th multimedia file by m multimedia files in the multimedia file ring structure, and the multimedia file forward or backward from the i-th multimedia file by m+1 multimedia files in the multimedia file ring structure is determined as an (i+1)-th multimedia file, the value of i is increased by 1, and it is returned to the step of extracting the i-th multimedia file in the multimedia file ring structure as the i-th multimedia file in the random playlist, where m is a positive integer.

For a better understanding of the generation of the above-mentioned random playlist, reference is made to Figure 5, which is a schematic diagram of a multimedia file ring structure. The node represents a multimedia file and the number in the node is an identity of the multimedia file.

If the first multimedia file is node 10, the first multimedia file, i.e., node 10, is extracted from the multimedia file ring structure, and it is counted forward from node 10 by two multimedia files, the multimedia file forward from node 10 by 3 multimedia files is determined as the second multimedia file in the random playlist, i.e., the node 13. By this analogy, the resulting play order of the random playlist is node 10, node 13, node 1, node 4, node 7, node 11, node 15, node 5, node 9, node 2, node 8, node 3, node 14, node 6, node 12.

It should be noted that, according to the embodiment of the present disclosure, the values of m may be set as desired, and may be the same or may be different for different multimedia file ring structures, which are not limited thereto.

It should be noted that if the number of nodes remaining in the multimedia file ring structure is less than m+1, the same node may be counted at least once to extract the (m+1)-th multimedia file. For example, if the remaining nodes are node 10 and node 5, m is 4, and the counting starts from node 10, the counting order is node 10, node 5, node 10, node 5, node 10, and the fifth counting node is node 10, thus node 10 is extracted. If the number of nodes remaining in the multimedia file ring structure is one, the remaining node is determined as the last multimedia file in the random playlist.

In Step 303, in a case that there is only one random playlist, the multimedia files are played based on the order of the multimedia files in the random playlist.

In Step 304, in a case that there are two or more random playlists, the two or more random playlists are combined into one list and the multimedia files are played based on the order of the multimedia files in the one list.

According to the embodiment of the present disclosure, the device divides all the multimedia files into at least one group. If there is only one group, there is only one random playlist, and if there is only one random playlist, the device will play the multimedia files based on the order of the multimedia files in the random playlist, such that the multimedia files may be played randomly, and each multimedia file will be played, thereby improving the user experience. If there are two or more groups, there will be two or more random playlists, and if there are two or more random playlists, the two or more random playlists may be combined into one list and the multimedia files are played based on the order of the multimedia files in the one list.

The two or more random playlists may be combined into one list as follows. The random playlist is taken as the unit, the two or more random playlists are sorted into one total random playlist, and the multimedia files are played based on the order of the multimedia files in the total random playlist. For example, if there are three random playlists being list 1, list 2 and list 3, and the total random playlist is formed according to the order of list 1, list 3 and list 2, the first multimedia file in the list 3 is played after the multimedia files in the list 1 are played sequentially, the first multimedia file in the list 2 is played after the multimedia files in the list 3 are played sequentially, and the multimedia files in the list 2 are played sequentially.

Alternatively, the two or more random playlists may be combined into one list as follows. The extraction order of the two or more random playlists is determined, the multimedia files in each random playlist are extracted from the two or more random playlists sequentially based on the extraction order, then an total random playlist is obtained. For example, if there are 3 random playlists being list 1, list 2 and list 3, and the extraction order is the list 3, the list 1, and the list 2, the first multimedia file in the list 3 is extracted, then the first multimedia file in the list 1 is extracted, after that, the first multimedia file in the list 2 is extracted. In the following, the second multimedia file in the list 3 is extracted, then the second multimedia file in the list 1 is extracted, after that, the second multimedia file in the list 2 is extracted. By this analogy, the total random playlist is obtained. If the numbers of the multimedia files in the list 1, the list 2 and the list 3 are different, after the extraction of one list is accomplished, the list is removed from the original extraction order, the remaining multimedia files in the remaining lists are extracted based on the order in the random playlists. For example, if the number of multimedia files in the list 1 is 30, the number of multimedia files in list 2 is 40, and the number of multimedia files in the list 3 is 50, the extraction of list 1 is accomplished after the 30th multimedia file 1 in each of the random playlists is extracted. Thus the 31 st multimedia file in the list 2 is extracted, and then the 31 st multimedia file in the list 3 is extracted. After that, the 31 st multimedia file in the list 2 is extracted, and by this analogy, the multimedia files are extracted sequentially until the 40th multimedia files in the list 2 and the list 3 are extracted. Thus the multimedia files in the list 2 are all extracted, 10 multimedia files are remaining in the list 3, and the remaining 10 multimedia files in the list 3 are listed at the end of the total random playlist.

According to the embodiment of the present disclosure, the device may divide the to-be-played multimedia files into at least one group sequentially or randomly, and generates one multimedia file ring structure for each group, and for each multimedia file ring structure, extracts the multimedia files according to a pre-set extraction rule, and sorts the multimedia files based on an extraction order to obtain the random playlist corresponding to the multimedia file ring structure. If there is only one random playlist, the multimedia files are played based on the order of the multimedia files in the random playlist. If there are two or more random playlists, the two or more random playlists may be combined into one list and the multimedia files are played based on the order of the multimedia files in the one list. By generating multimedia file ring structures, extracting multimedia files from the multimedia file ring structures to generate random playlists, the multimedia files are randomly played with the same probability, and the case that some multimedia files are played repeatedly and other multimedia files are never played is avoided during the random play, thereby improving the user experience effectively.

According to the embodiment of the present disclosure, if all the multimedia files in the generated random playlist has been played in the random play, the multimedia files in the random playlist are played in a loop, or are played based on a random playlist regenerated according to the technical solution of the present disclosure. In practical applications, the play depends on the requirements, which is not limited hereinto.

It should be noted that, according to the embodiment of the present disclosure, the random play of the multimedia files is realized by generating the random playlist. In the practical application, if the time interval between two adjacent random play is smaller than a pre-set value, the second random play may be performed based on the first random playlist, and may start from a multimedia file next to the multimedia file with which the first random play ends, or the second random play may be performed based on a regenerated new random playlist. If the time interval between two adjacent random play is larger than the pre-set value, the second random play may be performed based on the first random playlist, and may start from a multimedia file next to the multimedia file with which the first random play ends, or the second random play may be performed from the start of the first random playlist. In the practical application, the update and usage of the random playlist may be set based on specific circumstances, which is not limited hereinto.

Referring to Figure 6, a random play device is further provided according to an embodiment of the present disclosure. The device includes an obtaining unit and a playing unit. The obtaining unit is configured to obtain to-be-played multimedia files. The playing unit is configured to divide the multimedia files into one or more groups, determine a play order for the to-be-played multimedia files based on the groups to form a random playlist, and play the to-be-played multimedia files based on the random playlist.

Referring to Figure 7, the playing unit according to the embodiment shown in Figure 6 of the present disclosure may include a dividing and generating module 501, an extracting module 502 and a playing module 503.

The dividing and generating module 501 is configured to divide the to-be-played multimedia files into at least one group, and generate one multimedia file ring structure for each group.

The extracting module 502 is configured to, after the dividing and generating module 501 generates the multimedia file ring structure, for each multimedia file ring structure, extract the multimedia files according to a pre-set extraction rule, and sort the multimedia files based on an extraction order to obtain the random playlist corresponding to the multimedia file ring structure.

The playing module 503 is configured to, after the extracting module 502 obtains the random playlist, play the multimedia files based on the obtained random playlist.

According to the embodiment of the present disclosure, the dividing and generating module 501 of the random play device divides the to-be-played multimedia files into at least one group, and generates one multimedia file ring structure for each group. Then, the extracting module 502, for each multimedia file ring structure, extracts the multimedia files according to the pre-set extraction rule, and sorts the multimedia files based on the extraction order to obtain the random playlist corresponding to the multimedia file ring structure. Finally, the playing module 503 plays the multimedia files based on the obtained random playlist.

According to the embodiment of the present disclosure, the device divides the to-be-played multimedia files into at least one group, and generates one multimedia file ring structure for each group; for each multimedia file ring structure, extracts the multimedia files according to a pre-set extraction rule, and sorts the multimedia files based on an extraction order to obtain the random playlist corresponding to the multimedia file ring structure; and plays the multimedia files based on the obtained multiple random playlists. By generating multimedia file ring structures, extracting multimedia files according to the pre-set extraction rules to generate random playlists, the multimedia files are randomly played with the same probability, and the case that some multimedia files are played repeatedly and other multimedia files are never played is avoided during the random play, thereby improving the user experience effectively.

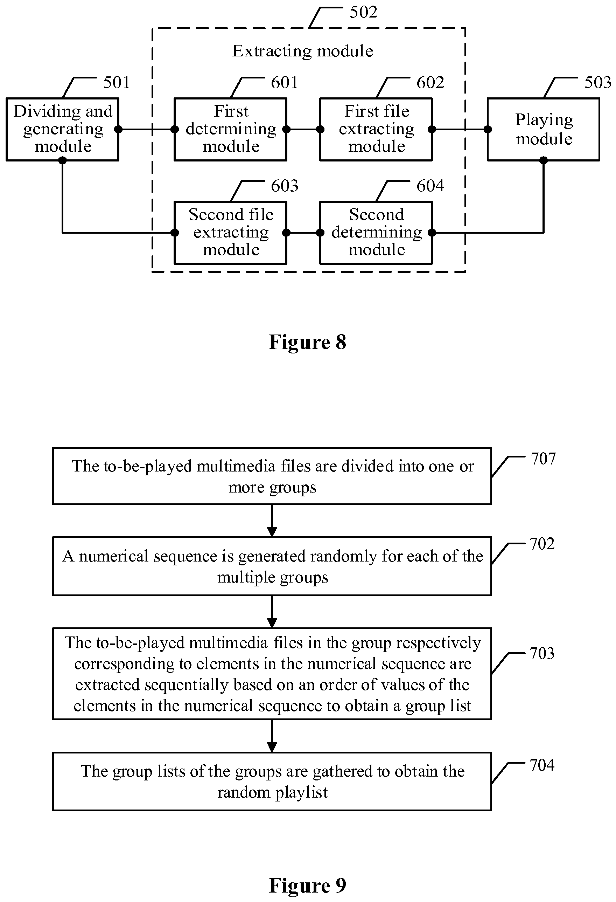

For a better understanding of the technical solution according to the embodiment of the present disclosure, reference is made to Figure 8, which shows a structure of a random play device according to an embodiment of the present disclosure. The random play device includes a dividing and generating module 501, an extracting module 502 and a playing module 503, which are according to and similar to the embodiment shown in Figure 7, and are not limited thereto.

According to the embodiment of the present disclosure, the extracting module 502 includes a first determining module 601 and a first file extracting module 602. For each multimedia file ring structure, in a case that an initial value of i is 1, i is a positive integer, and a first multimedia file is any one of the multimedia files in the multimedia file ring structure:
the first determining module 601 is configured to count forward or backward from an i-th multimedia file by m multimedia files in the multimedia file ring structure, and determine the multimedia file forward or backward from the i-th multimedia file by m+1 multimedia files in the multimedia file ring structure as an (i+1)-th multimedia file, where m is a positive integer; and
the first file extracting module 602 is configured to extract the i-th multimedia file as an i-th multimedia file in the random playlist, increase the value of i by 1, and return to execute the first determining module 601.

For a better understanding of the above-described the first determining module 601 and the first file extracting module 602, reference is made to Figure 5, which is a schematic diagram of a multimedia file ring structure. One node represents one multimedia file and the number in the node is an identity of the multimedia file.

In the case where the first multimedia file is the node 5, the multimedia file is extracted in the clockwise direction, and m is three, the second multimedia file is node 9 according to the above-described method for generating the random playlist. The first multimedia file, i.e., node 5, is extracted, three nodes are counted clockwise, the node 13 is determined as the third multimedia file, and the second multimedia file, i.e., the node 9, is extracted. By this analogy, the resulting paly order of the random playlist is node 5, node 9, node 13, node 2, node 7, node 12, node 3, node 10, node 1, node 11, node 6, node 4, node 8, node 15, node 14.

Alternatively, according to the embodiment of the present disclosure, the extracting module 502 includes a second file extracting module 603 and a second determining module 604. In a case where an initial value of i is 1, i is a positive integer, and a first multimedia file is any one of the multimedia files in the multimedia file ring structure:
the second file extracting module 603 is configured to extract an i-th multimedia file in the multimedia file ring structure as an i-th multimedia file in the random playlist; and
the second determining module 604 is configured to count forward or backward from the i-th multimedia file by m multimedia files in the multimedia file ring structure, and determine the multimedia file forward or backward from the i-th multimedia file by m+1 multimedia files in the multimedia file ring structure as an (i+1)-th multimedia file, increase the value of i by 1, and return to execute the second file extracting module 603, where m is a positive integer.

For a better understanding of the second file extracting module 603 and the second determining module 604 described above, reference is made to Figure 5, which is a schematic diagram of a multimedia file ring structure. The node represents a multimedia file and the number in the node is an identity of the multimedia file.

If the first multimedia file is node 10, the first multimedia file, i.e., node 10, is extracted from the multimedia file ring structure, and it is counted forward from node 10 by two multimedia files, the multimedia file forward from node 10 by 3 multimedia files is determined as the second multimedia file in the random playlist, i.e., the node 13. By this analogy, the resulting play order of the random playlist is node 10, node 13, node 1, node 4, node 7, node 11, node 15, node 5, node 9, node 2, node 8, node 3, node 14, node 6, node 12.

It should be noted that, according to the embodiment of the present disclosure, the values of m may be set as desired, and may be the same or may be different for different multimedia file ring structures, which are not limited thereto.

It should be noted that if the number of nodes remaining in the multimedia file ring structure is less than m+1, the same node may be counted at least once to extract the (m+1)-th multimedia file. For example, if the remaining nodes are node 10 and node 5, m is 4, and the counting starts from node 10, the counting order is node 10, node 5, node 10, node 5, node 10, and the fifth counting node is node 10, thus node 10 is extracted. If the number of nodes remaining in the multimedia file ring structure is one, the remaining node is determined as the last multimedia file in the random playlist.

According to the embodiment of the present disclosure, the playing module 503 is specifically configured to: in a case that there is only one random playlist, play the multimedia files based on the order of the multimedia files in the random playlist; and in a case that there are two or more random playlists, combine the two or more random playlists into one list and paly the multimedia files based on the order of the multimedia files in the one list.

The playing module 503 may combine two or more random playlists into one list may be as follows. The random playlist is taken as the unit, the two or more random playlists are sorted into one total random playlist, and the multimedia files are played based on the order of the multimedia files in the total random playlist. For example, if there are three random playlists being list 1, list 2 and list 3, and the total random playlist is formed according to the order of list 1, list 3 and list 2, the first multimedia file in the list 3 is played after the multimedia files in the list 1 are played sequentially, the first multimedia file in the list 2 is played after the multimedia files in the list 3 are played sequentially, and the multimedia files in the list 2 are played sequentially.

Alternatively, the two or more random playlists may be combined into one list as follows. The extraction order of the two or more random playlists is determined, the multimedia files in each random playlist are extracted from the two or more random playlists sequentially based on the extraction order, then an total random playlist is obtained. For example, if there are 3 random playlists being list 1, list 2 and list 3, and the extraction order is the list 3, the list 1, and the list 2, the first multimedia file in the list 3 is extracted, then the first multimedia file in the list 1 is extracted, after that, the first multimedia file in the list 2 is extracted. In the following, the second multimedia file in the list 3 is extracted, then the second multimedia file in the list 1 is extracted, after that, the second multimedia file in the list 2 is extracted. By this analogy, the total random playlist is obtained. If the numbers of the multimedia files in the list 1, the list 2 and the list 3 are different, after the extraction of one list is accomplished, the list is removed from the original extraction order, the remaining multimedia files in the remaining lists are extracted based on the order in the random playlists. For example, if the number of multimedia files in the list 1 is 30, the number of multimedia files in list 2 is 40, and the number of multimedia files in the list 3 is 50, the extraction of list 1 is accomplished after the 30th multimedia file 1 in each of the random playlists is extracted. Thus the 31 st multimedia file in the list 2 is extracted, and then the 31 st multimedia file in the list 3 is extracted. After that, the 31 st multimedia file in the list 2 is extracted, and by this analogy, the multimedia files are extracted sequentially until the 40th multimedia files in the list 2 and the list 3 are extracted. Thus the multimedia files in the list 2 are all extracted, 10 multimedia files are remaining in the list 3, and the remaining 10 multimedia files in the list 3 are listed at the end of the total random playlist.

According to the embodiment of the present disclosure, the dividing and generating module 501 is specifically configured to divide the to-be-played multimedia files into at least one group sequentially or randomly, and generate one multimedia file ring structure for each group.

The numbers of multimedia files in the groups may be the same or may be different. For example, if there are 100 multimedia files, the 100 multimedia files may be divided into two groups, with 50 multimedia files for each of the two groups, or with 30 multimedia files for one group and 70 multimedia files for the other group.

According to the embodiment of the present disclosure, the dividing and generating module 501 of the random play device divides all the multimedia files in the playlist to be played into at least one group sequentially or randomly, and generates one multimedia file ring structure for each group. Then the extracting module 502, for each multimedia file ring structure, extracts the multimedia files according to the pre-set extraction rule and sorts the multimedia files based on an extraction order to obtain the random playlist corresponding to the multimedia file ring structure. Specifically, for each multimedia file ring structure, in a case that an initial value of i is 1, i is a positive integer, and a first multimedia file is any one of the multimedia files in the multimedia file ring structure: the first determining module 601 of the extracting module 502 counts forward or backward from an i-th multimedia file by m multimedia files in the multimedia file ring structure, and determines the multimedia file forward or backward from the i-th multimedia file by m+1 multimedia files in the multimedia file ring structure as an (i+1)-th multimedia file, where m is a positive integer; and the first file extracting module 602 extracts the i-th multimedia file as an i-th multimedia file in the random playlist, increases the value of i by 1, and returns to execute the first determining module 601. Alternatively, the second file extracting module 603 of the extracting module 502 extracts an i-th multimedia file in the multimedia file ring structure as an i-th multimedia file in the random playlist; and the second determining module 604 counts forward or backward from the i-th multimedia file by m multimedia files in the multimedia file ring structure, and determines the multimedia file forward or backward from the i-th multimedia file by m+1 multimedia files in the multimedia file ring structure as an (i+1)-th multimedia file, increases the value of i by 1, and returns to execute the second file extracting module 603, where m is a positive integer. In a case that there is only one random playlist, the playing module 503 plays the multimedia files based on the order of the multimedia files in the random playlist; and in a case that there are two or more random playlists, the playing module 503 combines the two or more random playlists into one list and palys the multimedia files based on the order of the multimedia files in the one list.

According to the embodiment of the present disclosure, the device may divide all the multimedia files in the playlist to be played into at least one group sequentially or randomly, and generates one multimedia file ring structure for each group, and for each multimedia file ring structure, extracts the multimedia files according to a pre-set extraction rule, and sorts the multimedia files based on an extraction order to obtain the random playlist corresponding to the multimedia file ring structure. If there is only one random playlist, the multimedia files are played based on the order of the multimedia files in the random playlist. If there are two or more random playlists, the two or more random playlists may be combined into one list and the multimedia files are played based on the order of the multimedia files in the one list. By generating multimedia file ring structures, extracting multimedia files from the multimedia file ring structures to generate random playlists, the multimedia files are randomly played with the same probability, and the case that some multimedia files are played repeatedly and other multimedia files are never played is avoided during the random play, thereby improving the user experience effectively.

The embodiment of the present disclosure provides an improved random play method and device. The method and device can avoid the case where the multimedia file that has been played is randomly extracted again in a short time and is played repeatedly, but some media files have never been played. The method and device are described in detail below.

According to the embodiment of the present disclosure, the random play method and device can be widely applied to various types of media players, such as music players, video players or picture players. Accordingly, the to-be-played multimedia files in the playlist may include media files such as songs, videos or pictures. It should be noted that, in the practical application, the random play method and device can be further applied to other similar media file play device, which is not limited here.

Referring to Figure 9, the dividing the multimedia files into one or more groups, determining the play order for the to-be-played multimedia files based on the groups to form the random playlist, and playing the to-be-played multimedia files based on the random playlist, which are according to the embodiment shown in Figure 2, may include Steps 701 to 704.

In Step 701, the to-be-played multimedia files are divided into one or more groups.

In the present embodiment, the original playlist includes multiple to-be-played multimedia files which are sorted according to a specific position order. The random play device can divide the to-be-played multimedia files into groups in multiple ways to obtain multiple groups sorted according to a specific position order. For example, a number of consecutive to-be-played multimedia files are assigned into one group according to a position order, until all the to-be-played multimedia files are assigned, where the number of to-be-played multimedia files in the multiple groups can be the same or different. Alternatively, one to-be-played multimedia file is assigned to one of the multiple groups according to the position order, until all the to-be-played multimedia files are assigned. It should be noted that, in some other embodiments, there may be other ways to divide the to-be-played multimedia files into groups, which is not limited herein.

In Step 702, a numerical sequence is generated randomly for each of the multiple groups.

In the present embodiment, the numerical sequence is randomly generated, of which the length equals to the number of to-be-played multimedia files in the group. The length of the numerical sequence refers to the number of elements in the numerical sequence. In a case that the number of elements in the numerical sequence is equal to the number of to-be-played multimedia files in the group, each element in the numerical sequence uniquely corresponds to one to-be-played multimedia file in the group. For example, with the position number as a reference, the element can correspond to the to-be-played multimedia file which has the same position number as the element. The first element in the numerical sequence corresponds to the first to-be-played multimedia file in the group, the second element in the numerical sequence corresponds to the second to-be-played multimedia file in the group, and by this analogy, the correspondence between the elements and the to-be-played multimedia files may be formed. It should be noted that, in some other embodiments, other correspondence may be formed in the case where the number of elements in the numerical sequence equals to the number of to-be-played multimedia files in the group, for example, the first element in the numerical sequence corresponds to the last to-be-played multimedia file in the group, or the correspondence is formed according to some function relationships, which is not limited hereinto.

In Step 703, the to-be-played multimedia files in the group respectively corresponding to elements in the numerical sequence are extracted sequentially based on an order of values of the elements in the numerical sequence to obtain a group list.

In the present embodiment, the values of the elements in the numerical sequence are different, and the values of the elements can be sorted, for example, from large to small or from small to large. It should be noted that in the practical application, there may be two elements of the same value, and in this case, the elements of the same value may be sorted with some general sorting mechanism, as long as the order can be determined.

After sorting the values of the elements, the random play device extracts sequentially the to-be-played multimedia files in the group respectively corresponding to elements in the numerical sequence based on an order of values of the elements in the numerical sequence to obtain a group list. In the present embodiment, due to the one-to-one correspondence between the elements and the to-be-played multimedia files, the generated group list includes the to-be-played multimedia files in the group, and each of the to-be-played multimedia files appears only once. Further, since the numerical sequences are generated randomly, the obtained group lists are different from each other.

In Step 704, the group lists of the groups are gathered to obtain the random playlist, and the multimedia files are played based on the random playlist.

In the present embodiment, after the group lists of the multiple groups are obtained, the random play device gathers the group lists of the groups to obtain the random playlist. The manner in which the group lists are gathered is not limited hereinto, and the group lists may be superposed as required according to the predetermined order. It should be understood that in a case where the obtained group list includes the to-be-played multimedia files in the group and each of the to-be-played multimedia files only appears once, the gathered random playlist also includes all the to-be-played multimedia files in the original playlists, and each of the to-be-played multimedia files appears only once.

In the technical solution according to the embodiments of the disclosure, the to-be-played multimedia files are divided into groups to obtain multiple groups, a numerical sequence is generated randomly for each of the groups, where a length of the numerical sequence equals to the number of the to-be-played multimedia files in the group such that each element in the numerical sequence is uniquely corresponding to one to-be-played multimedia file in the group, the to-be-played multimedia files in the group respectively corresponding to elements in the numerical sequence are extracted sequentially based on an order of values of the elements in the numerical sequence to obtain a group list, and group lists of the groups are gathered to obtain the random playlist, and the multimedia files are played based on the random playlist. According to the embodiment of the present disclosure, each element in the numerical sequence is uniquely corresponding to one to-be-played multimedia file in the group, and the values of the elements in the numerical sequence are sorted to determine the order of the to-be-played multimedia files in the group successively. The generated group list include the to-be-played multimedia files in the group, and each of the to-be-played multimedia files only appears once. Since the numerical sequences are generated randomly, the obtained group lists are different from each other. Thus, compared with the conventional art, the random strategy according to the embodiments of the present disclosure avoids the case where the to-be-played multimedia files that have been played are randomly extracted again in a short time and are played repeatedly, but some to-be-played multimedia files have never been played, such that each of the to-be-played multimedia files only appears once during one cycle. Meanwhile, the embodiments of the disclosure has a low computational complexity and can shorten the generation time for the random playlist.

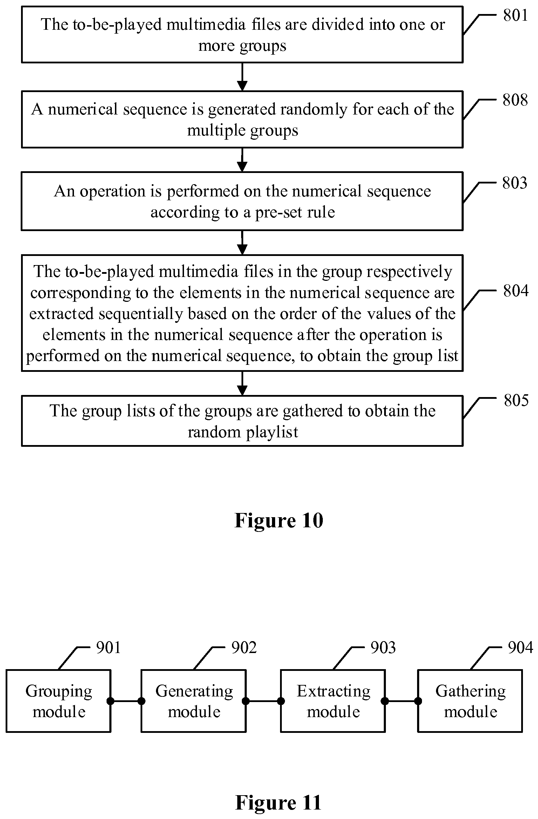

Referring to Figure10, assumption of further random is made for the random play method based on the embodiment shown in Figure 9. The dividing the multimedia files into one or more groups, determining the play order for the to-be-played multimedia files based on the groups to form the random playlist, and playing the to-be-played multimedia files based on the random playlist in this embodiment may include Step 801 to Step 805.

In Step 801, the to-be-played multimedia files are divided into one or more groups.

In Step 802, a numerical sequence is generated randomly for each of the multiple groups.

In the present embodiment, the process from Step 801 to Step 802 are the same as the process from Step 701 to Step 702 according to the embodiment shown in Figure 9, which is not repeated herein.

In Step 803, an operation is performed on the numerical sequence according to a pre-set rule.

In the present embodiment, performing an operation on the numerical sequence may include performing a bitwise operation between the numerical sequence and a target sequence, and the target sequence includes the position numbers of the to-be-played multimedia files in the group. In the present embodiment, the position numbers of the to-be-played multimedia files in the group are sorted for each of the multiple groups, so as to set the position numbers as the target sequence, i.e., 1, 2, 3, ..., n, where n is the number of to-be-played multimedia files in the group. It should be noted that the target sequence can alternatively be other commonly used numerical sequence, as long as the length of the target sequence is equal to the number of to-be-played multimedia files in the group.

In the present embodiment, the bitwise operation may include bitwise addition, bitwise XOR, bitwise AND or bitwise NAND, and so on. In the practical application, more other operations may be adopted, which is not limited hereinto. Optionally, in the present embodiment, the number of to-be-played multimedia files in the each of multiple groups and the values of the elements in the randomly generated numerical sequence can be limited within 255, so as to perform a bitwise operation on the numerical sequence.

It should be noted that the purpose of performing the operations on the numerical sequence is for assumption of further random, and the operations are not limited hereinto.

In Step 804, the to-be-played multimedia files in the group respectively corresponding to the elements in the numerical sequence are extracted sequentially based on the order of the values of the elements in the numerical sequence after the operation is performed on the numerical sequence, to obtain the group list.

In the present embodiment, after the assumption of further random is made, the random play device extracts sequentially the to-be-played multimedia files in the group respectively corresponding to the elements in the numerical sequence based on the order of the values of the elements in the numerical sequence after the operation is performed on the numerical sequence, to obtain the group list. In the present embodiment, after the operation is performed on the numerical sequence, the values of the elements in the numerical sequence are different, and the values of the elements can be sorted, for example, from large to small or from small to large. It should be noted that in the practical application, there may be two elements of the same value, and in this case, the elements of the same value may be sorted with some general sorting mechanism, as long as the order can be determined.

After sorting the values of the elements, the random play device extracts sequentially the to-be-played multimedia files in the group respectively corresponding to elements in the numerical sequence based on an order of values of the elements in the numerical sequence to obtain a group list. In the present embodiment, due to the one-to-one correspondence between the elements and the to-be-played multimedia files, the generated group list includes the to-be-played multimedia files in the group, and each of the to-be-played multimedia files appears only once. Further, since the numerical sequences are generated randomly, the obtained group lists are different from each other.

For example, a group X, i.e., (X₁, X₂, X₃, X₄, X₅, X₆), sorted according to a specific position order is obtained, and a randomly generated numerical sequence is P, i.e., (P₁, P₂, P₃, P₄, P₅, P₆). Under the condition that an element corresponds to a to-be-played multimedia file with the same position number as the element, X₁ corresponds to P₁, X₂ corresponds to P₂, X₃ corresponds to P₃, X₄ corresponds to P₄, X₅ corresponds to P₅, X₆ corresponds to P₆.

If in the operated numerical sequence, the order of values is P₄, P₃, P₅, P₂, P₆, P₁, the to-be-played multimedia files X₄, X₃, X₅, X₂, X₆, X₁ are extracted sequentially, i.e., the obtained group list is (X₄, X₃, X₅, X₂, X₆, X₁).

In Step 805, the group lists of the groups are gathered to obtain the random playlist, and the multimedia files are played based on the random playlist.

In the present embodiment, after the group lists of the multiple groups are obtained, the random play device gathers the group lists of the groups to obtain the random playlist and the multimedia files are played based on the random playlist. The manner in which the group lists are gathered is not limited hereinto, and the group lists may be superposed as required according to the predetermined order. It should be understood that in a case where the obtained group list includes the to-be-played multimedia files in the group and each of the to-be-played multimedia files only appears once, the gathered random playlist also includes all the to-be-played multimedia files in the original playlists, and each of the to-be-played multimedia files appears only once.

In the technical solution according to the embodiments of the disclosure, the to-be-played multimedia files are divided into groups to obtain multiple groups, a numerical sequence is generated randomly for each of the groups, where a length of the numerical sequence equals to the number of the to-be-played multimedia files in the group such that each element in the numerical sequence is uniquely corresponding to one to-be-played multimedia file in the group. After an operation is performed on the numerical sequence to make assumption of further random, the to-be-played multimedia files in the group respectively corresponding to elements in the numerical sequence are extracted sequentially based on an order of values of the elements in the numerical sequence to obtain a group list, and group lists of the groups are gathered to obtain the random playlist, and the multimedia files are played based on the random playlist. According to the embodiment of the present disclosure, each element in the numerical sequence is uniquely corresponding to one to-be-played multimedia file in the group, and the values of the elements in the numerical sequence are sorted to determine the order of the to-be-played multimedia files in the group successively. The generated group list include the to-be-played multimedia files in the group, and each of the to-be-played multimedia files only appears once. Since the numerical sequences are generated randomly, the obtained group lists are different from each other. Thus, compared with the conventional art, the random strategy according to the embodiments of the present disclosure avoids the case where the to-be-played multimedia files that have been played are randomly extracted again in a short time and are played repeatedly, but some to-be-played multimedia files have never been played, such that each of the to-be-played multimedia files only appears once during one cycle. Meanwhile, the embodiments of the disclosure has a low computational complexity and can shorten the generation time for the random playlist.

The random play method according to the embodiment of the present disclosure is described above. Hereinafter, the random play device according to the embodiment of the present disclosure is described. Referring to Figure 11, the playing unit according to the embodiment shown in Figure 5 of the present disclosure may include a grouping module 901, a generating module 902, an extracting module 903 and a gathering module 904.

The grouping module 901 is configured to divide the to-be-played multimedia files into one or more groups.

The generating module 902 is configured to generate randomly a numerical sequence for each of the groups, where a length of the numerical sequence equals to the number of the to-be-played multimedia files in the group, and each element in the numerical sequence is uniquely corresponding to one to-be-played multimedia file in the group.

The extracting module 903 is configured to extract sequentially the to-be-played multimedia files in the group respectively corresponding to elements in the numerical sequence based on an order of values of the elements in the numerical sequence to obtain a group list.

The gathering module 904 is configured to gather group lists of the groups to obtain the random playlist.

For the sake of understanding, the internal operation flow of the random play device according to the present embodiment is described below with a specific application scenario as an example.

The grouping module 901 divides the to-be-played multimedia files into one or more groups. The generating module 902 generates randomly a numerical sequence for each of the groups, where a length of the numerical sequence equals to the number of the to-be-played multimedia files in the group, and each element in the numerical sequence is uniquely corresponding to one to-be-played multimedia file in the group. The extracting module 903 extracts sequentially the to-be-played multimedia files in the group respectively corresponding to elements in the numerical sequence based on an order of values of the elements in the numerical sequence to obtain a group list. The gathering module 904 gathers group lists of the groups to obtain the random playlist.

In the technical solution according to the embodiment of the present disclosure, firstly the grouping module 901 divides the to-be-played multimedia files into one or more groups. Then the generating module 902 generates randomly a numerical sequence for each of the groups, where a length of the numerical sequence equals to the number of the to-be-played multimedia files in the group, and each element in the numerical sequence is uniquely corresponding to one to-be-played multimedia file in the group. And then the extracting module 903 extracts sequentially the to-be-played multimedia files in the group respectively corresponding to elements in the numerical sequence based on an order of values of the elements in the numerical sequence to obtain a group list. Finally, the gathering module 904 gathers group lists of the groups to obtain the random playlist. According to the embodiment of the present disclosure, each element in the numerical sequence is uniquely corresponding to one to-be-played multimedia file in the group, and the values of the elements in the numerical sequence are sorted to determine the order of the to-be-played multimedia files in the group successively. The generated group list includes the to-be-played multimedia files in the group, and each of the to-be-played multimedia files only appears once. Since the numerical sequences are generated randomly, the obtained group lists are different from each other. Thus, compared with the conventional art, the random strategy according to the embodiments of the present disclosure avoids the case where the to-be-played multimedia files that have been played are randomly extracted again in a short time and are played repeatedly, but some to-be-played multimedia files have never been played, such that each of the to-be-played multimedia files only appears once during one cycle. Meanwhile, the embodiments of the disclosure has a low computational complexity and can shorten the generation time for the random playlist.

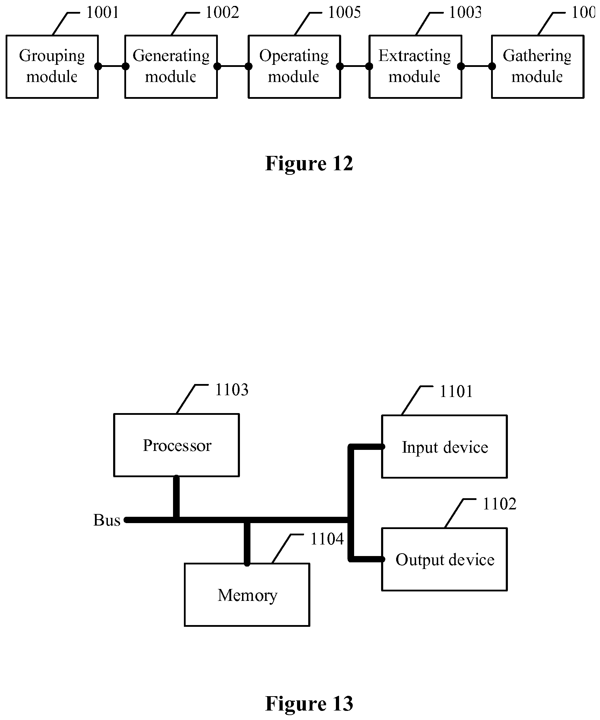

On the basis of the embodiment shown in Figure 11, a specific structure of the random play device with assumption of further random is described below. Referring to Figure 12, the playing unit according to another embodiment of the present disclosure may include a grouping module 1001, a generating module 1002, an extracting module 1003 and a gathering module 1004.

The grouping module 1001 is configured to divide the to-be-played multimedia files into one or more groups.

The generating module 1002 is configured to generate randomly a numerical sequence for each of the groups, where a length of the numerical sequence equals to the number of the to-be-played multimedia files in the group, and each element in the numerical sequence is uniquely corresponding to one to-be-played multimedia file in the group.

The extracting module 1003 is configured to extract sequentially the to-be-played multimedia files in the group respectively corresponding to elements in the numerical sequence based on an order of values of the elements in the numerical sequence to obtain a group list.

The gathering module 1004 is configured to gather group lists of the groups to obtain the random playlist and play the multimedia files based on the random playlist.

In the present embodiment, the random play device further includes an operating module 1005. The operating module 1005 is configured to, before extracting sequentially the to-be-played multimedia files in the group respectively corresponding to the elements in the numerical sequence based on the order of the values of the elements in the numerical sequence to obtain the group list, perform an operation on the numerical sequence according to a pre-set rule. The extracting module 1003 is configured to extract sequentially the to-be-played multimedia files in the group respectively corresponding to the elements in the numerical sequence based on the order of the values of the elements in the numerical sequence after the operation is performed on the numerical sequence, to obtain the group list.

Optionally, in the present embodiment, the operating module 1005 is configured to perform a bitwise operation between the numerical sequence and a target sequence, where the target sequence includes position numbers of the to-be-played multimedia files in the group.

Optionally, in the present embodiment, the bitwise operation includes bitwise addition, bitwise XOR, bitwise AND or bitwise NAND.

Optionally, in the present embodiment, the case that each element in the numerical sequence corresponds to one to-be-played multimedia file in the group refers to the case that the element corresponds to the to-be-played multimedia file having the same position number as the element.

The random play device according to the embodiment of the present disclosure is described above in the viewpoint of the modular functional entity, and the random play device according to the embodiment of the present disclosure is described below in the viewpoint of hardware processing. Referring to Figure 13, the random play device according to another embodiment of the present disclosure includes an input device 1101, an output device 1102, a processor 1103, and a memory 1104 (the number of processors 503 in the random play device may be one or more, and one processor 1103 is taken as an example in Figure 13). In some embodiments of the present disclosure, the input device 1101, the output device 1102, the processor 1103 and the memory 1104 may be connected to each other via a bus or in another way. The bus connection is taken as an example in Figure 13.

The processor 1103 is configured to, when running the operation instructions stored in the memory 1104:
divide the to-be-played multimedia files into one or more groups;
generate randomly a numerical sequence for each of the groups, where a length of the numerical sequence equals to the number of the to-be-played multimedia files in the group, and each element in the numerical sequence is uniquely corresponding to one to-be-played multimedia file in the group;
extract sequentially the to-be-played multimedia files in the group respectively corresponding to elements in the numerical sequence based on an order of values of the elements in the numerical sequence to obtain a group list;
gather group lists of the groups to obtain the random playlist, and play the multimedia files based on the random playlist.

In some embodiments of the present disclosure, the processor 1103 may be further configured to:
before extracting sequentially the to-be-played multimedia files in the group respectively corresponding to the elements in the numerical sequence based on the order of the values of the elements in the numerical sequence to obtain the group list, perform an operation on the numerical sequence according to a pre-set rule; and
extract sequentially the to-be-played multimedia files in the group respectively corresponding to the elements in the numerical sequence based on the order of the values of the elements in the numerical sequence after the operation is performed on the numerical sequence, to obtain the group list.

In some embodiments of the present disclosure, the processor 1103 may be configured specifically to:
perform a bitwise operation between the numerical sequence and a target sequence, where the target sequence includes position numbers of the to-be-played multimedia files in the group.

In some embodiments of the present disclosure, the bitwise operation includes bitwise addition, bitwise XOR, bitwise AND or bitwise NAND.

In some embodiments of the present disclosure, the case that each element in the numerical sequence corresponds to one to-be-played multimedia file in the group refers to the case that the element corresponds to the to-be-played multimedia file having the same position number as the element.

It will be apparent to those skilled in the art that the specific processes of the systems, devices and modules described above may be referred to the corresponding processes in the foregoing method embodiments for convenience and simplicity of the description, and will not be repeated herein.

The random play method of the present disclosure can be applied to a terminal device for playing multimedia, i.e., a user terminal device, or a mobile terminal device including a smart phone, a tablet computer, a notebook, etc. That is to say, the user listens to or watches the multimedia through the multimedia play application (APP, Application) .

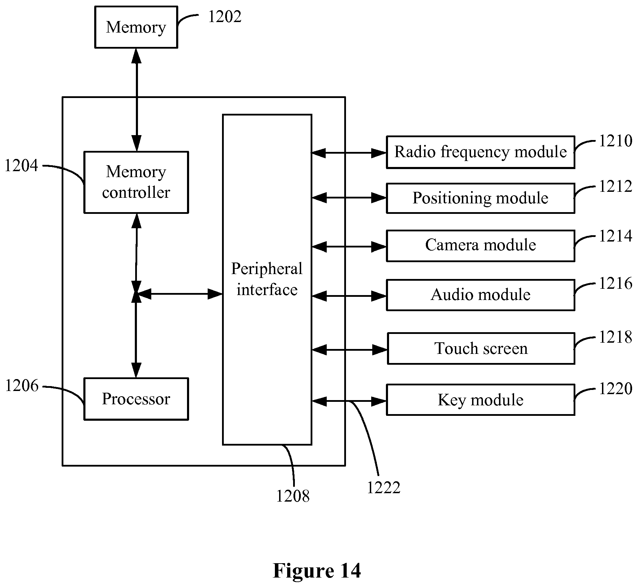

Reference is made to Figure 14, which is a schematic structure diagram of a terminal device. The terminal device includes a mobile terminal device. The terminal device 100 includes a memory 1202, a memory controller 1204, one or more (only one shown in the drawing) processor 1206, a peripheral interface 1208, a radio frequency module 1210, a positioning module 1212, an camera module 1214, an audio module 1216, a touch screen 1218, and a key module 1220. These components communicate with each other through one or more communication bus/signal lines 1222.

It should be understood that the structure shown in Figure 14 is merely exemplary, and the terminal device 100 may include more or fewer components than the components shown in Figure 14, or have a different configuration from that shown in Figure 14. The components shown in Figure 12 may be implemented by hardware, software, or a combination thereof.

The memory 1202 may be configured to store software programs and modules, such as program instructions/modules corresponding to the method and device for random play within the terminal device according to the embodiment of the present disclosure. The processor 1206 performs various functional applications and data processing by running the software programs and modules stored in the memory 1202, i.e., the above-mentioned method for random play in the terminal device is implemented.

The memory 1202 may include a high speed random access memory, and may further include a nonvolatile memory such as one or more magnetic storage devices, flash memory, or other nonvolatile solid state memory. In some embodiments, the memory 1202 may further include a memory which is remotely disposed with respect to the processor 1206. These remote memories may be connected to the terminal device 100 via a network. Examples of such networks include, but are not limited to, the Internet, the intranet, the local area network, the mobile communication network, and combinations thereof. The access of the processor 306 and other possible components to the memory 1202 may be performed under the control of the memory controller 304.

The peripheral interface 1208 couples various inputs/input devices to the CPU and memory 1202. The processor 106 runs various software and instructions within the memory 1202 to perform various functions of the terminal device 100 and to perform data processing.

In some embodiments, the peripheral interface 1208, the processor 1206, and the memory controller 104 may be implemented in a single chip. In other embodiments, they can be implemented by separate chips.

The radio frequency module 1210 is configured to receive and transmit electromagnetic waves to realize the mutual conversion of the electromagnetic wave and the electric signal, thereby communicating with the communication network or other equipments. The radio frequency module 1210 may include various existing circuit elements for performing these functions, such as antennas, radio frequency transceivers, digital signal processors, encryption/decryption chips, subscriber identity modules (SIM) cards, and memories. The radio frequency module 1210 may communicate with various networks such as the Internet, an intranet, a wireless network, or communicate with other devices via a wireless network. The above-mentioned wireless network may include a cellular telephone network, a wireless local area network or a metropolitan area network. The above wireless networks may use various communication standards, protocols and techniques including, but not limited to, Global System for Mobile Communication (Global System for Mobile Communication, GSM), Enhanced Data GSM Environment (Enhanced Data GSM Environment, EDGE), Wideband Code Division Multiple Access (Wideband Code Division Multiple Access, W-CDMA), Code Division Access (Code Division Access, CDMA), Time Division Multiple Access (Time Division Multiple Access, TDMA), Bluetooth, Wireless Fidelity (Wireless Fidelity, WiFi) (such as American Institute of Electrical and Electronics Engineers standards IEEE 802.11a, IEEE 802.11b, IEEE802.11g and/or IEEE 802.11n), Voice over Internet Protocal (Voice over Internet Protocal, VoIP), Worldwide Interoperability for Microwave Access (Worldwide Interoperability for Microwave Access, Wi-Max), other protocols for mail, instant messaging and short messaging, as well as any other suitable communication protocols, and even those that are not yet developed.

The positioning module 1212 is configured to obtain the current position of the terminal device 100. Examples of the positioning modules 1212 include, but are not limited to, Global Positioning System (GPS), positioning techniques based on the wireless local area network or mobile communication networks.

The camera module 1214 is configured to take pictures or videos. The taken pictures or videos may be stored in the memory 1202 and may be transmitted via the radio frequency module 1210.

The audio module 1216 provides an audio interface to the user, and may include one or more microphones, one or more loudspeakers, and an audio circuit. The audio circuit receives the sound data from the peripheral interface 1208, converts the sound data into electrical information, and transmits the electrical information to the loudspeaker. The loudspeaker converts the electrical information into sound waves that the human ear can hear. The audio circuit further receives electrical information from the microphone, converts the electrical signal into sound data, and transmits the sound data to the peripheral interface 1208 for further processing. The audio data may be obtained from the memory 1202 or through the radio frequency module 1210. In addition, the audio data may be further stored in the memory 1202 or transmitted through the radio frequency module 1210. In some embodiments, the audio module 1216 may further include a earphone hole for providing an audio interface to the earphone or other device.

The touch screen 1218 provides an output and input interface between the terminal device 100 and the user. Specifically, the touch screen 1218 displays video output to the user, and the contents of the video output may include text, graphics, video, and any combination thereof. Some of the output results correspond to some user interface objects. The touch screen 1218 also receives user input, such as a gesture operation including clicking and sliding, such that the user interface object responds to the input of these users. The techniques for detecting the user input may be resistive, capacitive, or any other possible touch detection techniques. A displaying unit of the touch screen 1218 includes, but is not limited to, a liquid crystal display or a light emitting polymer display.

The key module 1220 also provides an input interface between the user and the terminal device 100, and the user can press different keys to enable the terminal device 100 to perform different functions.

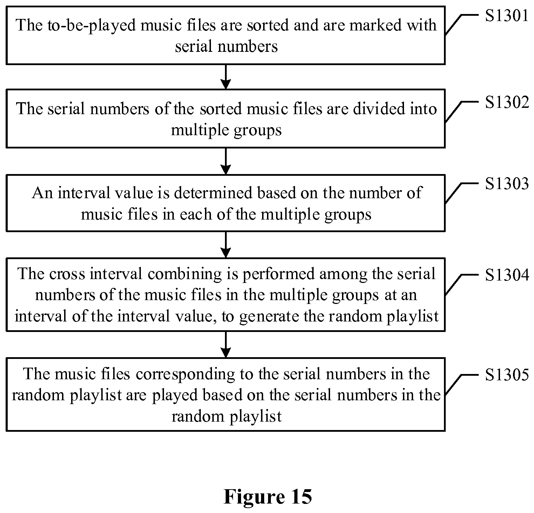

Referring to Figure 15, the dividing the multimedia files into one or more groups, determining the play order for the to-be-played multimedia files based on the groups to form the random playlist, and playing the to-be-played multimedia files based on the random playlist, which are according to the embodiment shown in Figure 2, may include Step 1301 to Step 1305.

In Step 1301, the to-be-played multimedia files are sorted and are marked with serial numbers.

The to-be-played multimedia files may be multimedia files stored locally in the terminal device 100 or multimedia files stored on the server. The terminal device 100 for playing the multimedia sorts the to-be-played multimedia files and marks the multimedia files with corresponding serial numbers. If the number of multimedia files is N, and N is a natural number, the serial numbers of the multimedia files are X(i), where i includes 0, 1, 2, ..., N-1.

For example, if there are 10 to-be-played multimedia files, the 10 multimedia files are sorted randomly or are sorted according to the first characters of the names of the multimedia files, and the corresponding serial numbers X(0), X(1), X(2), ..., X(9) are marked for the 10 multimedia files.

In Step 1302, the serial numbers of the sorted multimedia files are divided into multiple groups.

After the N multimedia files are sorted, the serial numbers of the N multimedia files are divided into multiple groups. For example, the serial numbers X(0), X(1), X(2), ..., X(9) are divided into two groups, the first group includes X(0), X(1), X(2), X(3) and X(4), and the second group includes X(5), X(6), X(7), X(8) and X(9). Alternatively, the serial numbers X(0), X(1), X(2), ..., X(9) are divided into three groups, the first group includes X(0), X(1) and X(2), the second group includes X(3), X(4), X(5), and the third group includes X(6), X(7), X(8) and X(9).

In Step 1303, an interval value is determined based on the number of multimedia files in each of the multiple groups.

The interval value is randomly determined or specified based on the number of multimedia files in each of the multiple groups. A cross interval combining is performed among the serial numbers of multimedia files in the multiple groups at an interval of the interval value, i.e., a cross interval combining is performed among the sequences formed by the serial numbers of the multimedia files in respective groups at an interval of the interval value, and one new sequence is generated.

In Step 1304, the cross interval combining is performed among the serial numbers of the multimedia files in the multiple groups at an interval of the interval value, to generate the random playlist.

The case where the cross interval combining is performed among the serial numbers of the multimedia files in the multiple groups at an interval of the interval value may be the case where the serial numbers of the multimedia files in the each of the multiple groups are sorted to generate one sequence, and the cross interval combining is performed among the sequences corresponding to the multimedia files in the multiple groups at an interval of the interval value, to generate a random playlist.

In Step 1305, the multimedia files corresponding to the serial numbers in the random playlist are played based on the serial numbers in the random playlist.

After the random playlist is generated, the multimedia files corresponding to the serial numbers are played based on the serial numbers in the random playlist.

The above steps may be performed on the server. If the server performs the above steps, the generated random playlist is transmitted to the play terminal for play.

In the random play method according to the embodiment of the present disclosure, the serial numbers of the multimedia files are divided into one or more groups, an interval value is determined based on the number of the multimedia files in each of the groups, the cross interval combining is performed among the serial numbers of the multimedia files in the groups at an interval of the interval value to generate the random playlist, and the multimedia files corresponding to the serial numbers in the random playlist are played based on the random playlist. In this way, the balance of probabilities that the multimedia files are played during random play is effectively improved.

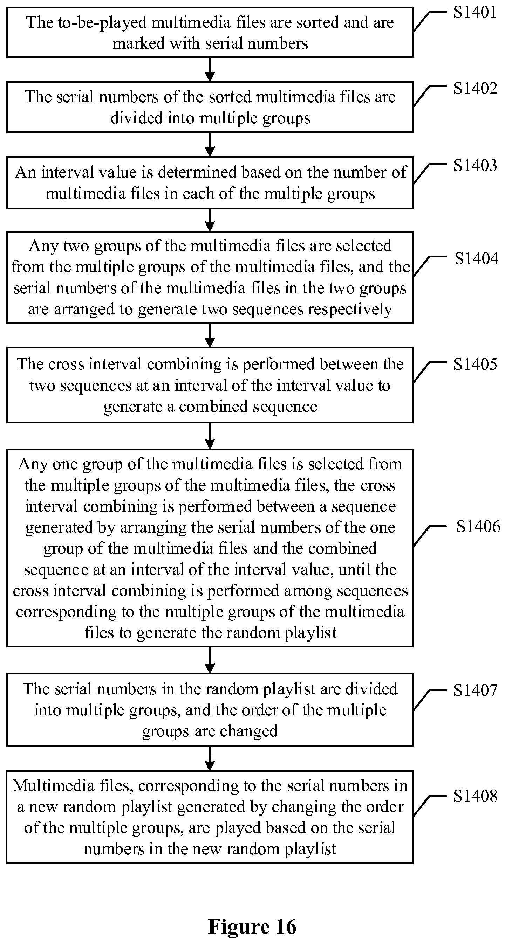

Referring to Figure 16, according to another embodiment of the present disclosure, the determining the play order for the to-be-played multimedia files to form the random playlist, and playing the to-be-played multimedia files based on the random playlist may include Step 1401 to Step 1408.

In Step 1401, the to-be-played multimedia files are sorted and are marked with serial numbers.

The terminal device 100 for playing the multimedia sorts the to-be-played multimedia files, and marks the multimedia files with corresponding serial numbers. If the number of multimedia files is N, and N is a natural number, the serial numbers of the multimedia files are X(i), where i includes 0, 1, 2, ..., and N-1.

In Step 1402, the serial numbers of the sorted multimedia files are divided into multiple groups.

After the N multimedia files are sorted, the serial numbers of the N multimedia files are divided into multiple groups, such as two groups and three groups. The more the number of multimedia files, the more groups the multimedia files can be divided into. In general, the numbers of multimedia files in the groups are equal or close to each other after the multimedia files are divided into multiple groups.

In Step 1403, an interval value is determined based on the number of multimedia files in each of the multiple groups.

The interval value is randomly determined or specified based on the number of multimedia files in each of the multiple groups. A cross interval combining is performed among the serial numbers of multimedia files in the multiple groups at an interval of the interval value, i.e., a cross interval combining is performed among the sequences formed by the serial numbers of the multimedia files in respective groups at an interval of the interval value, and one new sequence is generated.

Two groups of multimedia files are taken as an example. The cross interval combining is performed by inserting one of the two sequences formed by the serial numbers of the multimedia files in the two groups respectively into the other of the two sequences at an interval of the interval value, to generate one new sequence.

The minimum of the interval value may be 1, and the maximum of the interval value may be an arbitrary value less than the number of multimedia files in the group, and the interval value is preferably 5.

In Step 1404, any two groups of the multimedia files are selected from the multiple groups of the multimedia files, and the serial numbers of the multimedia files in the two groups are arranged to generate two sequences respectively.

After the interval value is determined, the cross interval combining is performed among the serial numbers of the multimedia files in the groups at an interval of the interval value to generate the random playlist. For the sake of description, the cross interval combining between two groups of multimedia files are taken as an example, and may be a reference for the cross interval combining among multiple groups of multimedia files.

Specifically, any two groups of the multimedia files are selected from the multiple groups of the multimedia files, and the serial numbers of the multimedia files in the two groups are arranged to generate two sequences respectively.

According to one embodiment, N multimedia files are divided into multiple groups, and any two groups of multimedia files are selected. The first group has the serial numbers X1(i), the second group has the serial numbers X2(j), i and j are natural numbers, and i<j. Identical numbers of multimedia files for respective groups are not required according to the present embodiment. A first sequence is generated by arranging the serial numbers of the first group, and a second sequence is generated by arranging the serial numbers of the second group.

In Step 1405, the cross interval combining is performed between the two sequences at an interval of the interval value to generate a combined sequence.

The cross interval combining is performed between the first sequence and the second sequence at an interval of the interval value, and the serial numbers of the second group X2(j) are inserted into the serial numbers of the first group X1(i).

Specifically, in a case that the interval value is 2, one of the serial numbers of X2(j) is inserted into the serial numbers of X1(i) at an interval of 2 serial numbers. In a case that the interval value is 1, the cross interval combining is performed between the serial numbers of X1(i) and the serial numbers of X2(j) at an interval of 1 serial number to form the random playlist. 10 multimedia files are taken as an example. The 10 multimedia files are divided into two groups with the same number of multimedia files, the serial numbers of one group include X1(0), X1(1), X1(2), X1(3) and X1(4), and the serial numbers of the other group include X2(5), X2(6), X2(7), X2(8), and X2(9). In a case that the interval value is 1, the cross interval combining is performed between the serial numbers of the multimedia files in the two groups an interval of 1 serial number, and the order for the random play sequence is X1(0), X2(5), X1(1), X2(6), X1(2), X2(7), X1(3), X2(8), X1(4), X2(9). In a case that the interval value is 2, one of the serial numbers of the second group X2(j) is inserted into the serial numbers of the first group X1(i) at an interval of 2 serial numbers, and the order for the random play sequence is X1(0), X1(1), X2(5), X1(2), X1(3), X2(6), X1(4), X2(7), X2(8), X2(9). By this analogy, all the serial numbers of the second group X2(j) are inserted.

In Step 1406, any one group of the multimedia files is selected from the multiple groups of the multimedia files, the cross interval combining is performed between a sequence generated by arranging the serial numbers of the one group of the multimedia files and the combined sequence at an interval of the interval value, until the cross interval combining is performed among sequences corresponding to the multiple groups of the multimedia files to generate the random playlist.

After the cross interval combining is performed between the first sequence and the second sequence to generate a combined sequence, any one group of multimedia files are selected from the other groups of multimedia files, a third sequence is generated by arranging the serial numbers of the one group of multimedia files, and the cross interval combining is performed between the third sequence and the combined sequence at an interval of the interval value, in the same way as the cross interval combining performed between the first sequence and the second sequence. By this analogy, the cross interval combining is performed among the sequences corresponding to all the groups of multimedia files to generate one random playlist.

Further, the random playlist is grouped into multiple new sequences, a new interval value is determined based on the number of the multimedia files corresponding to each of the new sequences, where the new interval value is used to perform the cross interval combining among the multiple new sequences. The cross interval combining is performed among the multiple new sequences at an interval of the new interval value to generate a new random playlist, and the multimedia files corresponding to the serial numbers in the new random playlist is played based on the serial numbers in the generated new random playlist. By repeating the above steps for multiple times, a new random playlist is generated for multiple times, the serial numbers of the multimedia files may be combined more fully, and the probability of random play for each multimedia file further increases.

In Step 1407, the serial numbers in the random playlist are divided into multiple groups, and the order of the multiple groups are changed.

For example, the serial numbers corresponding to the multimedia files of the random playlist are divided into two groups, and the order of the two groups of serial numbers is changed, and the serial numbers of the multimedia files are further combined.

In Step 1408, multimedia files, corresponding to the serial numbers in a new random playlist generated by changing the order of the multiple groups, are played based on the serial numbers in the new random playlist.

After the random list is grouped and the order of the groups is changed, a new random playlist is generated, and the serial numbers corresponding to the multimedia files in the new random playlist is more fully combined. The multimedia files corresponding to serial numbers in the new random playlist are played.

In the random play method according to the embodiment of the present disclosure, the serial numbers of the multimedia files are divided into one or more groups, an interval value is determined based on the number of the multimedia files in each of the groups, the cross interval combining is performed among the serial numbers of the multimedia files in the groups at an interval of the interval value to generate the random playlist, and the multimedia files corresponding to the serial numbers in the random playlist are played based on the random playlist. In this way, the balance of probabilities that the multimedia files are played during random play is effectively improved.

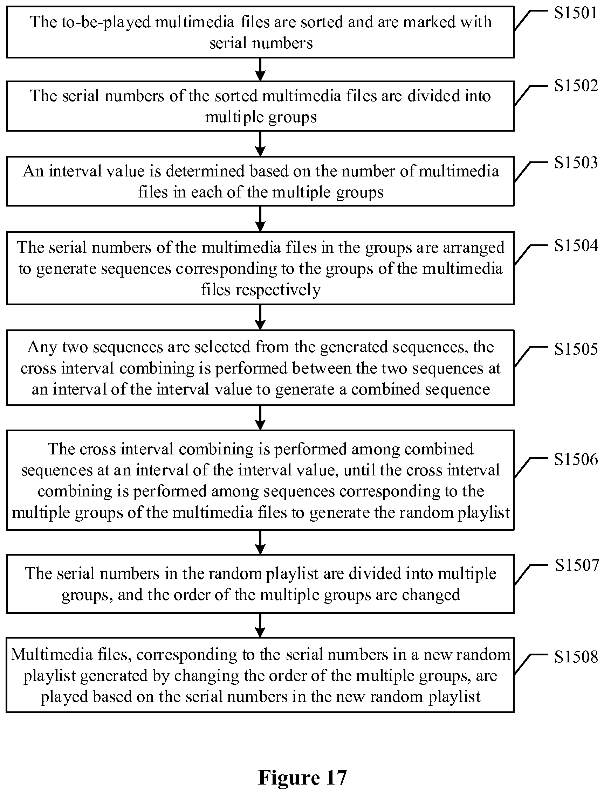

Referring to Figure 17, according to an embodiment, the dividing the multimedia files into one or more groups, determining the play order for the to-be-played multimedia files based on the groups to form the random playlist, and playing the to-be-played multimedia files based on the random playlist, may include Step 1501 to Step 1508.

In Step 1501, the to-be-played multimedia files are sorted and are marked with serial numbers.

The terminal device 100 for playing the multimedia sorts the to-be-played multimedia files, and marks the multimedia files with corresponding serial numbers. If the number of multimedia files is N, and N is a natural number, the serial numbers of the multimedia files are X(i), where i includes 0, 1, 2, ..., and N-1.

In Step 1502, the serial numbers of the sorted multimedia files are divided into multiple groups.

After the N multimedia files are sorted, the serial numbers of the N multimedia files are divided into multiple groups, such as two groups and three groups. The more the number of multimedia files, the more groups the multimedia files can be divided into. In general, the numbers of multimedia files in the groups are equal or close to each other after the multimedia files are divided into multiple groups.

In Step 1503, an interval value is determined based on the number of multimedia files in each of the multiple groups.

The interval value is randomly determined or specified based on the number of multimedia files in each of the multiple groups. A cross interval combining is performed among the serial numbers of multimedia files in the multiple groups at an interval of the interval value, i.e., a cross interval combining is performed among the sequences formed by the serial numbers of the multimedia files in respective groups at an interval of the interval value, and one new sequence is generated.

Two groups of multimedia files are taken as an example. The cross interval combining is performed by inserting one of the two sequences formed by the serial numbers of the multimedia files in the two groups respectively into the other of the two sequences at an interval of the interval value, to generate one new sequence.

In Step 1504, the serial numbers of the multimedia files in the groups are arranged to generate sequences corresponding to the groups of the multimedia files respectively.

After the interval value is determined, the cross interval combining is performed among the serial numbers of the multimedia files in the groups at an interval of the interval value to generate the random playlist. For the sake of description, the cross interval combining between two groups of multimedia files are taken as an example, and may be a reference for the cross interval combining among multiple groups of multimedia files.

Specifically, the serial numbers of the multimedia files in the groups are arranged to generate sequences corresponding to the groups of the multimedia files respectively.

In Step 1505, any two sequences are selected from the generated sequences, the cross interval combining is performed between the two sequences at an interval of the interval value to generate a combined sequence.

For example, a first sequence and a second sequence are selected for the first time and the cross interval combining is performed between the first sequence and the second sequence at an interval of the interval value to generate a first combined sequence. The process of the cross interval combining is described in the foregoing embodiments and is not repeated herein. A third sequence and a fourth sequence are selected for the second time and the cross interval combining is performed between the third sequence and the fourth sequence at an interval of the interval value to generate a second combined sequence. A fifth sequence and a sixth sequence are selected for the third time and the cross interval combining is performed between the fifth sequence and the sixth sequence at an interval of the interval value to generate a third combined sequence. By this analogy, the process continues.

In Step 1506, the cross interval combining is performed among combined sequences at an interval of the interval value, until the cross interval combining is performed among sequences corresponding to the multiple groups of the multimedia files to generate the random playlist.

The cross interval combining is performed among the combined sequences such as the first combined sequence, the second combined sequence, and the third combined sequence at an interval of the interval value, until the cross interval combining is performed among sequences corresponding to the multiple groups of the multimedia files to generate the random playlist.

Different from the forgoing embodiments, in which the cross interval combining is performed between the sequences corresponding to the serial numbers of the two groups of multimedia files and then the cross interval combining is performed between the sequence corresponding to the serial numbers of the third group of multimedia files and the sequence generated by combining the sequences corresponding to the two groups, in this embodiment, the cross interval combining is performed between two sequences corresponding to the serial numbers of multimedia files to generate a combined sequence, and then the cross interval combining is performed between two combined sequences until one random playlist is generated.

Further, the random playlist is grouped into multiple new sequences, a new interval value is determined based on the number of the multimedia files corresponding to each of the new sequences, where the new interval value is used to perform the cross interval combining among the multiple new sequences. The cross interval combining is performed among the multiple new sequences at an interval of the new interval value to generate a new random playlist, and the multimedia files corresponding to the serial numbers in the new random playlist is played based on the serial numbers in the generated new random playlist. By repeating the above steps for multiple times, a new random playlist is generated for multiple times, the serial numbers of the multimedia files may be combined more fully, and the probability of random play for each multimedia file further increases.

In Step 1507, the serial numbers in the random playlist are divided into multiple groups, and the order of the multiple groups are changed.

For example, the serial numbers corresponding to the multimedia files of the random playlist are divided into three groups, and the order of the three groups of serial numbers is changed, and the serial numbers of the multimedia files are further combined.

In Step 1508, multimedia files, corresponding to the serial numbers in a new random playlist generated by changing the order of the multiple groups, are played based on the serial numbers in the new random playlist.

After the random list is grouped and the order of the groups is changed, a new random playlist is generated, and the serial numbers corresponding to the multimedia files in the new random playlist is more fully combined. The multimedia files corresponding to serial numbers in the new random playlist are played.

In the random play method according to the embodiment of the present disclosure, the serial numbers of the multimedia files are divided into one or more groups, an interval value is determined based on the number of the multimedia files in each of the groups, the cross interval combining is performed among the serial numbers of the multimedia files in the groups at an interval of the interval value to generate the random playlist, and the multimedia files corresponding to the serial numbers in the random playlist are played based on the random playlist. In this way, the balance of probabilities that the multimedia files are played during random play is effectively improved.

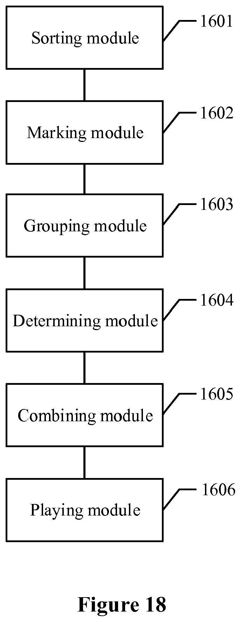

Referring to Figure 18, the random play device according to the embodiment shown in Figure 5 of the present disclosure may operate in the terminal device 100 shown in Figure 14, to realize the random play method in the above-described embodiment. As shown in Figure 18, the playing unit in the random play device may include a sorting module 1601, a marking module 1602, a grouping module 1603, a determining module 1604, a combining module 1605 and a playing module 1606.

The sorting module 1601 is configured to sort the to-be-played multimedia files.

The marking module 1602 is configured to mark the multimedia files with serial numbers after the sorting module 1601 sorts the multimedia files.

The grouping module 1603 is configured to divide the serial numbers of the sorted multimedia files marked by the marking module 1602 into multiple groups.

The determining module 1604 is configured to determine an interval value based on the number of the multimedia files in each of the groups divided by the grouping module 1603, where a cross interval combining is performed among the serial numbers of the multimedia files in the groups at an interval of the interval value.

The combining module 1605 is configured to perform the cross interval combining among the serial numbers of the multimedia files in the groups at an interval of the interval value determined by the determining module 504, to generate the random playlist.

The playing module 1606 is configured to play the multimedia files corresponding to the serial numbers in the random playlist generated by the combining module 1605 based on the serial numbers in the random playlist.

In order to know the details of the functions of the function modules in the random play device according to the present embodiment, which are not repeated herein, the description of embodiments shown in Figure 14 to Figure 17 may be referred to.

In the random play device according to the embodiment of the present disclosure, the serial numbers of the multimedia files are divided into one or more groups, an interval value is determined based on the number of the multimedia files in each of the groups, the cross interval combining is performed among the serial numbers of the multimedia files in the groups at an interval of the interval value to generate the random playlist, and the multimedia files corresponding to the serial numbers in the random playlist are played based on the random playlist. In this way, the balance of probabilities that the multimedia files are played during random play is effectively improved.

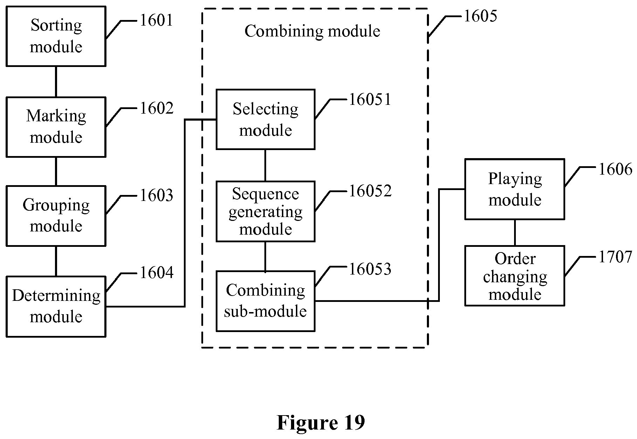

Referring to Figure 19, another random play device is further provided according to the embodiment. The random play device may be applied to the terminal device 100 shown in Figure 14, to implement the random play method according to the above embodiments. As shown in Figure 19, the playing unit of the random play device may include a sorting module 1601, a marking module 1602, a grouping module 1603, a determining module 1604, a combining module 1605 and a playing module 1606.

The sorting module 1601 is configured to sort the to-be-played multimedia files.

The marking module 1602 is configured to mark the multimedia files with serial numbers after the sorting module 1601 sorts the multimedia files.

The grouping module 1603 is configured to divide the serial numbers of the sorted multimedia files marked by the marking module 1602 into multiple groups.

The determining module 1604 is configured to determine an interval value based on the number of the multimedia files in each of the groups divided by the grouping module 1603, where a cross interval combining is performed among the serial numbers of the multimedia files in the groups at an interval of the interval value.

The combining module 1605 is configured to perform the cross interval combining among the serial numbers of the multimedia files in the groups at an interval of the interval value determined by the determining module 504, to generate the random playlist.

The playing module 1606 is configured to play the multimedia files corresponding to the serial numbers in the random playlist generated by the combining module 1605 based on the serial numbers in the random playlist.

Furthermore, the grouping module 1603 is further configured to group the random playlist into multiple new sequences more than once, the determining module 1604 is further configured to determine a new interval value based on the number of the multimedia files corresponding to each of the new sequences, the combining module 1605 is further configured to perform the cross interval combining among the multiple new sequences at an interval of the new interval value to generate a new random playlist; and the playing module 1606 is further configured to play the multimedia files corresponding to the serial numbers in the random playlist based on the serial numbers in the random playlist.

Furthermore, the combining module 1605 includes a selecting module 16051, a sequence generating module 16052 and a combining sub-module 16053. The selecting module 16051 is configured to select any two groups of the multimedia files from the multiple groups of the multimedia files. The sequence generating module 16052 is configured to arrange the serial numbers of the multimedia files in the two groups to generate two sequences respectively. The combining sub-module 16053 is configured to perform the cross interval combining between the two sequences at an interval of the interval value to generate a combined sequence. The selecting module 16051 is further configured to select any one group of the multimedia files from the multiple groups of the multimedia files. The combining sub-module 16053 is further configured to perform the cross interval combining between a sequence generated by arranging the serial numbers of the one group of the multimedia files selected by the selecting module 16501 from the multiple groups of the multimedia files and the combined sequence at an interval of the interval value, until the cross interval combining is performed among sequences corresponding to the multiple groups of the multimedia files to generate the random playlist.

Furthermore, the sequence generating module 16052 is further configured to arrange the serial numbers of the multimedia files in the groups to generate sequences corresponding to the groups of the multimedia files respectively; the selecting module 16051 is further configured to select any two sequences from the generated sequences; the combining sub-module 16053 is further configured to perform the cross interval combining between the two sequences at an interval of the interval value to generate a combined sequence; and the combining sub-module 16053 is further configured to perform the cross interval combining among combined sequences at an interval of the interval value, until the cross interval combining is performed among sequences corresponding to the multiple groups of the multimedia files to generate the random playlist.

Furthermore, the combining sub-module 16053 is further configured to perform the cross interval combining by inserting one of the two sequences into the other of the two sequences at an interval of the interval value, to generate the combined sequence.

Furthermore, the random play device further includes: an order changing module 1707, configured to divide the serial numbers in the random playlist into multiple groups, and change an order of the multiple groups. The playing module 1606 is further configured to play the multimedia files, corresponding to the serial numbers in a new random playlist generated by changing the order of the multiple groups, based on the serial numbers in the new random playlist.

In order to know the details of the functions of the function modules in the random play device according to the present embodiment, which are not repeated herein, the description of embodiments shown in Figure 14 to Figure 17 may be referred to.

In the random play device according to the embodiment of the present disclosure, the serial numbers of the multimedia files are divided into one or more groups, an interval value is determined based on the number of the multimedia files in each of the groups, the cross interval combining is performed among the serial numbers of the multimedia files in the groups at an interval of the interval value to generate the random playlist, and the multimedia files corresponding to the serial numbers in the random playlist are played based on the random playlist. In this way, the balance of probabilities that the multimedia files are played during random play is effectively improved.

It should be noted that the embodiments of the present disclosure are described in a progressive manner, each of which focuses on the differences from the other embodiments, and for the same or similar parts, other embodiments may be referred to. The device embodiments are described simply since they are substantially similar to the method embodiments, and for the relevant parts, the method embodiments may be referred to.

The foregoing description is merely preferred embodiments of the disclosure and is not intended to limit the present disclosure. While the disclosure has been disclosed by way of preferred embodiments, it is not intended to limit the disclosure. Those skilled in the art may make some alterations or modifications on the above technical content to achieve equivalent embodiments without departing from the scope of technical solution of the disclosure, and any simple alterations, equivalent changes or modifications based on the essential of the disclosure without departing from the scope of technical solution of the disclosure fall within the scope of technical solution of the present disclosure.

## Claims

1. A random play method, comprising:
obtaining to-be-played multimedia files; and
dividing the multimedia files into one or more groups, determining a play order for the to-be-played multimedia files based on the groups to form a random playlist, and playing the to-be-played multimedia files based on the random playlist.

2. The method according to claim 1, wherein the dividing the multimedia files into one or more groups, determining the play order for the to-be-played multimedia files based on the groups to form the random playlist, and playing the to-be-played multimedia files based on the random playlist comprises:
dividing the to-be-played multimedia files into at least one group, and generating one multimedia file ring structure for each group;
for each multimedia file ring structure, extracting the multimedia files according to a pre-set extraction rule, and sorting the multimedia files based on an extraction order to obtain the random playlist corresponding to the multimedia file ring structure; and
playing the multimedia files based on the obtained random playlist.

3. The method according to claim 2, wherein the for each multimedia file ring structure, extracting the multimedia files according to the pre-set extraction rule, and sorting the multimedia files based on the extraction order to obtain the random playlist corresponding to the multimedia file ring structure comprises: for each multimedia file ring structure,
an initial value of i being 1, i being a positive integer, and a first multimedia file being any one of the multimedia files in the multimedia file ring structure,
counting forward or backward from an i-th multimedia file by m multimedia files in the multimedia file ring structure, and determining the multimedia file forward or backward from the i-th multimedia file by m+1 multimedia files in the multimedia file ring structure as an (i+1)-th multimedia file, wherein m is a positive integer; and
extracting the i-th multimedia file as an i-th multimedia file in the random playlist, increasing the value of i by 1, and returning to the step of counting forward or backward from the i-th multimedia file by m multimedia files.

4. The method according to claim 2, wherein the for each multimedia file ring structure, extracting the multimedia files according to the pre-set extraction rule, and sorting the multimedia files based on the extraction order to obtain the random playlist corresponding to the multimedia file ring structure comprises: for each multimedia file ring structure,
an initial value of i being 1, i being a positive integer, and a first multimedia file being any one of the multimedia files in the multimedia file ring structure,
extracting an i-th multimedia file in the multimedia file ring structure as an i-th multimedia file in the random playlist; and
counting forward or backward from the i-th multimedia file by m multimedia files in the multimedia file ring structure, and determining the multimedia file forward or backward from the i-th multimedia file by m+1 multimedia files in the multimedia file ring structure as an (i+1)-th multimedia file, increasing the value of i by 1, and returning to the step of extracting the i-th multimedia file in the multimedia file ring structure as the i-th multimedia file in the random playlist, wherein m is a positive integer.

5. The method according to claim 1, wherein the dividing the multimedia files into one or more groups, determining the play order for the to-be-played multimedia files based on the groups to form the random playlist, and playing the to-be-played multimedia files based on the random playlist comprises:
dividing the to-be-played multimedia files into one or more groups;
generating randomly a numerical sequence for each of the groups, wherein a length of the numerical sequence equals to the number of the to-be-played multimedia files in the group, and each element in the numerical sequence is uniquely corresponding to one to-be-played multimedia file in the group;
extracting sequentially the to-be-played multimedia files in the group respectively corresponding to elements in the numerical sequence based on an order of values of the elements in the numerical sequence to obtain a group list;
gathering group lists of the groups to obtain the random playlist; and
playing the multimedia files based on the obtained random playlist.

6. The random play method according to claim 5, wherein before extracting sequentially the to-be-played multimedia files in the group respectively corresponding to the elements in the numerical sequence based on the order of the values of the elements in the numerical sequence to obtain the group list, the method further comprises:
performing an operation on the numerical sequence according to a pre-set rule; wherein
the extracting sequentially the to-be-played multimedia files in the group respectively corresponding to the elements in the numerical sequence based on the order of the values of the elements in the numerical sequence to obtain the group list comprises:
extracting sequentially the to-be-played multimedia files in the group respectively corresponding to the elements in the numerical sequence based on the order of the values of the elements in the numerical sequence after the operation is performed on the numerical sequence, to obtain the group list.

7. The random play method according to claim 6, wherein the performing the operation on the numerical sequence according to the pre-set rule comprises:
performing a bitwise operation between the numerical sequence and a target sequence, wherein the target sequence comprises position numbers of the to-be-played multimedia files in the group.

8. The method according to claim 1, wherein the dividing the multimedia files into one or more groups, determining the play order for the to-be-played multimedia files based on the groups to form the random playlist, and playing the to-be-played multimedia files based on the random playlist comprises:
sorting the to-be-played multimedia files and marking the to-be-played multimedia files with serial numbers;
dividing the serial numbers of the sorted multimedia files into a plurality of groups;
determining an interval value based on the number of the multimedia files in each of the groups, wherein a cross interval combining is performed among the serial numbers of the multimedia files in the groups at an interval of the interval value;
performing the cross interval combining among the serial numbers of the multimedia files in the groups at an interval of the interval value, to generate the random playlist; and
playing the multimedia files corresponding to the serial numbers in the random playlist based on the serial numbers in the random playlist.

9. The method according to claim 8, wherein after performing the cross interval combining among the serial numbers of the multimedia files in the groups at an interval of the interval value to generate the random playlist, the method further comprises:
performing following operations more than once: grouping the random playlist into a plurality of new sequences, determining a new interval value based on the number of the multimedia files corresponding to each of the new sequences, and performing the cross interval combining among the plurality of new sequences at an interval of the new interval value to generate a new random playlist; wherein
the playing the multimedia files corresponding to the serial numbers in the random playlist based on the serial numbers in the random playlist comprises:
playing the multimedia files corresponding to the serial numbers in the new random playlist based on the serial numbers in the generated new random playlist.

10. The method according to claim 8, wherein the performing the cross interval combining among the serial numbers of the multimedia files in the groups at an interval of the interval value to generate the random playlist comprises:
selecting any two groups of the multimedia files from the plurality of groups of the multimedia files, and arranging the serial numbers of the multimedia files in the two groups to generate two sequences respectively;
performing the cross interval combining between the two sequences at an interval of the interval value to generate a combined sequence; and
selecting any one group of the multimedia files from the plurality of groups of the multimedia files, performing the cross interval combining between a sequence generated by arranging the serial numbers of the one group of the multimedia files and the combined sequence at an interval of the interval value, until the cross interval combining is performed among sequences corresponding to the plurality of groups of the multimedia files to generate the random playlist.

11. The method according to claim 8, wherein the performing the cross interval combining among the serial numbers of the multimedia files in the groups at an interval of the interval value to generate the random playlist comprises:
arranging the serial numbers of the multimedia files in the groups to generate sequences corresponding to the groups of the multimedia files respectively;
selecting any two sequences from the generated sequences;
performing the cross interval combining between the two sequences at an interval of the interval value to generate a combined sequence; and
performing the cross interval combining among combined sequences at an interval of the interval value, until the cross interval combining is performed among sequences corresponding to the plurality of groups of the multimedia files to generate the random playlist.

12. The method according to claim 10 or 11, wherein the performing the cross interval combining between the two sequences at an interval of the interval value to generate the combined sequence comprises:
performing the cross interval combining by inserting one of the two sequences into the other of the two sequences at an interval of the interval value, to generate the combined sequence.

13. The method according to claim 8, further comprising:
dividing the serial numbers in the random playlist into a plurality of groups, and changing an order of the plurality of groups; and
playing music files, corresponding to the serial numbers in a new random playlist generated by changing the order of the plurality of groups, based on the serial numbers in the new random playlist.

14. A random play device, comprising:
an obtaining unit, configured to obtain to-be-played multimedia files; and
a playing unit, configured to divide the multimedia files into one or more groups, determine a play order for the to-be-played multimedia files based on the groups to form a random playlist, and play the to-be-played multimedia files based on the random playlist.

15. The device according to claim 14, wherein the playing unit comprises:
a dividing and generating module, configured to divide the to-be-played multimedia files into at least one group, and generate one multimedia file ring structure for each group;
an extracting module, configured to, after the dividing and generating module generates the multimedia file ring structure, for each multimedia file ring structure, extract the multimedia files according to a pre-set extraction rule, and sort the multimedia files based on an extraction order to obtain the random playlist corresponding to the multimedia file ring structure; and
a playing module, configured to, after the extracting module obtains the random playlist, play the multimedia files based on the obtained random playlist.

16. The device according to claim 14, wherein, for each multimedia file ring structure, an initial value of i is 1, i is a positive integer, and a first multimedia file is any one of the multimedia files in the multimedia file ring structure, and
an extracting module comprises:
a first determining module, configured to count forward or backward from an i-th multimedia file by m multimedia files in the multimedia file ring structure, and determine the multimedia file forward or backward from the i-th multimedia file by m+1 multimedia files in the multimedia file ring structure as an (i+1)-th multimedia file, wherein m is a positive integer; and
a first file extracting module, configured to extract the i-th multimedia file as an i-th multimedia file in the random playlist, increase the value of i by 1, and return to execute the first determining module.

17. The device according to claim 14, wherein for each multimedia file ring structure, an initial value of i is 1, i is a positive integer, and a first multimedia file is any one of the multimedia files in the multimedia file ring structure, and
an extracting module comprises:
a second file extracting module, configured to extract an i-th multimedia file in the multimedia file ring structure as an i-th multimedia file in the random playlist; and
a second determining module, configured to count forward or backward from the i-th multimedia file by m multimedia files in the multimedia file ring structure, and determine the multimedia file forward or backward from the i-th multimedia file by m+1 multimedia files in the multimedia file ring structure as an (i+1)-th multimedia file, increase the value of i by 1, and return to execute the second file extracting module, wherein m is a positive integer.

18. The device according to claim 14, wherein the playing unit comprises:
a grouping module, configured to divide the to-be-played multimedia files into one or more groups;
a generating module, configured to generate randomly a numerical sequence for each of the groups, wherein a length of the numerical sequence equals to the number of the to-be-played multimedia files in the group, and each element in the numerical sequence is uniquely corresponding to one to-be-played multimedia file in the group;
an extracting module, configured to extract sequentially the to-be-played multimedia files in the group respectively corresponding to elements in the numerical sequence based on an order of values of the elements in the numerical sequence to obtain a group list; and
a gathering module, configured to gather group lists of the groups to obtain the random playlist, and play the multimedia files based on the random playlist.

19. The random play device according to claim 18, further comprising:
an operating module, configured to, before extracting sequentially the to-be-played multimedia files in the group respectively corresponding to the elements in the numerical sequence based on the order of the values of the elements in the numerical sequence to obtain the group list, perform an operation on the numerical sequence according to a pre-set rule; wherein
the extracting module is configured to extract sequentially the to-be-played multimedia files in the group respectively corresponding to the elements in the numerical sequence based on the order of the values of the elements in the numerical sequence after the operation is performed on the numerical sequence, to obtain the group list.

20. The random play device according to claim 19, wherein the operating module is configured to perform a bitwise operation between the numerical sequence and a target sequence, wherein the target sequence comprises position numbers of the to-be-played multimedia files in the group.

21. The device according to claim 14, wherein the playing unit comprises:
a sorting module, configured to sort the to-be-played multimedia files;
a marking module, configured to mark the multimedia files with serial numbers after the sorting module sorts the multimedia files;
a grouping module, configured to divide the serial numbers of the sorted multimedia files marked by the marking module into a plurality of groups;
a determining module, configured to determine an interval value based on the number of the multimedia files in each of the groups divided by the grouping module, wherein a cross interval combining is performed among the serial numbers of the multimedia files in the groups at an interval of the interval value;
a combining module, configured to perform the cross interval combining among the serial numbers of the multimedia files in the groups at an interval of the interval value determined by the determining module, to generate the random playlist; and
a playing module, configured to play the multimedia files corresponding to the serial numbers in the random playlist generated by the combining module based on the serial numbers in the random playlist.

22. The device according to claim 21, wherein
the grouping module is further configured to group the random playlist into a plurality of new sequences more than once;
the determining module is further configured to determine a new interval value based on the number of the multimedia files corresponding to each of the new sequences;
the combining module is further configured to perform the cross interval combining among the plurality of new sequences at an interval of the new interval value to generate a new random playlist; and
the playing module is further configured to play the multimedia files corresponding to the serial numbers in the random playlist based on the serial numbers in the random playlist.

23. The device according to claim 21 or 22, wherein the combining module comprises:
a selecting module, configured to select any two groups of the multimedia files from the plurality of groups of the multimedia files;
a sequence generating module, configured to arrange the serial numbers of the multimedia files in the two groups to generate two sequences respectively;
a combining sub-module, configured to perform the cross interval combining between the two sequences at an interval of the interval value to generate a combined sequence; wherein
the selecting module is further configured to select any one group of the multimedia files from the plurality of groups of the multimedia files, and
the combining sub-module is further configured to perform the cross interval combining between a sequence generated by arranging the serial numbers of the one group of the multimedia files selected by the selecting module from the plurality of groups of the multimedia files and the combined sequence at an interval of the interval value, until the cross interval combining is performed among sequences corresponding to the plurality of groups of the multimedia files to generate the random playlist.

24. The device according to claim 23, wherein
the sequence generating module is further configured to arrange the serial numbers of the multimedia files in the groups to generate sequences corresponding to the groups of the multimedia files respectively;
the selecting module is further configured to select any two sequences from the generated sequences;
the combining sub-module is further configured to perform the cross interval combining between the two sequences at an interval of the interval value to generate a combined sequence; and
the combining sub-module is further configured to perform the cross interval combining among combined sequences at an interval of the interval value, until the cross interval combining is performed among sequences corresponding to the plurality of groups of the multimedia files to generate the random playlist.

25. The device according to claim 24, wherein the combining sub-module is further configured to perform the cross interval combining by inserting one of the two sequences into the other of the two sequences at an interval of the interval value, to generate the combined sequence.

26. The device according to claim 25, wherein the playing unit further comprises:
an order changing module, configured to divide the serial numbers in the random playlist into a plurality of groups, and change an order of the plurality of groups; and
the playing module is further configured to play the multimedia files, corresponding to the serial numbers in a new random playlist generated by changing the order of the plurality of groups, based on the serial numbers in the new random playlist.
